# EUROPEAN PATENT APPLICATION

(11) **EP 0 963 968 A1**
(43) Date of publication of application: **15.12.1999**
(21) Application number: 97902645.7
(22) Date of filing: 10.02.1997
(51) Int. Cl.: C04B 41/71

(54) **AGENT AND METHOD FOR SURFACE TREATMENT OF CALCIUM-BASE INORGANIC MEMBERS**

(71) Applicant: P & E International Inc., Katsushika-ku, Tokyo 124 (JP); Agio, Shinichi, Nagaoka-shi, Niigata 940 (JP)
(72) Inventor: IWAMA, Katsumi, Kanagawa 238-03 (JP); YOSHIMOTO, Toshio, Tokyo 197 (JP); SAITO, Manabu, Saitama 350 (JP); OTAKA, Moriyasu, Chiba 277 (JP)
(74) Representative: Shindler, Nigel
(86) International application number: JP9700348
(87) International publication number: WO9834888

(57) **Abstract**

The treatment agent is a three-liquid type agent consisting of a liquid base treatment agent in the state of a water slurry, a base reinforcing agent in the state of a liquid and a coloring agent. The base treatment agent is a mixture generally comprised of a silica-based powder or granular material principally comprised of silicon oxide; a calcium-containing substance containing either one of or both calcium hydroxide and a calcium oxide; organic acid and/or salt of organic acid having an acid dissociation exponent ranging from 3 to 5; and water. The base reinforcing agent is a mixture generally comprised of an aqueous solution of alkali silicate; and organic acid and/or salt of organic acid having an acid dissociation exponent ranging from 3 to 5. The coloring agent is a mixture produced by mixing a pigment and pearlite powder in the base reinforcing agent. By applying these agents in sequence, a smooth, crackless and lustrous color coating film which is very strong and has great resistance to water damage can be formed on a calcium-containing inorganic material in a short period of time. Furthermore, a surface treatment agent is easy to apply and is thus capable of increasing operation efficiency.

## Description

### Technical Filed

The present invention relates to an agent and a method for treating the surface of calcium-containing inorganic materials such as concrete. More particularly, the invention relates to a treatment method and a treatment agent for preventing deterioration of, coloring or otherwise treating the surface of said inorganic materials.

### Background Art

It is conventionally practiced to treat calcium-containing inorganic materials such as concrete, which are prone to gradual deterioration and weathering due to damages by sea water, invasion and freezing of rain water, acid rain and other causes. There are various treatments for this purpose, including forming a protective layer on the surface of the calcium-containing inorganic material by coating the surface with paint or a packing agent which are mainly composed of an inorganic substance or a polymer or polymers, filling existing cracks with resin or other suitable materials, and bonding together peeling or flaking inorganic materials with an adhesive such as resin. However, in cases where the calcium-containing inorganic materials to be treated are concrete or other materials which have only small pores on the surface, paint is hard to invade into these materials and is prone to peeling off. When conducting a simple repair using just a resin or the like, too, the resin often does not permeate the concrete, resulting in cracks or peeling afterwards.

Concrete made of Portland cement used in a general construction contains about 25 to 30 Wt % of calcium hydroxide (Ca(OH)₂), which is prone to reacting with acid. Therefore, a need exists for such concrete to be more weather resistant. Furthermore, as concrete continues to harden for a long period of time while being carbonized, there is also the potential of reinforcing bars or other materials embedded in the concrete gradually corroding, thereby reducing the strength of the building itself.

Examples of conventional methods of treating concrete or other calcium-containing inorganic material to repair or prevent deterioration of its surface are disclosed in Japanese Patent Application Publication No. 11988/1982, Japanese Patent Provisional Publication No. 320284/1989 and Japanese Patent Provisional Publication No. 43359/1981. The method described in said Japanese Patent Application Publication No. 11988/1982 calls for applying a water-soluble silicate compound to a calcium-containing inorganic material and allowing the compound to permeate the calcium-containing inorganic material thoroughly, and then coating the calcium-containing inorganic material with cement paste.

Like other conventional methods using a paste or a resin, however, the treating method disclosed in Japanese Patent provisional Publication No. 11988/1982 has such a drawback that the water-soluble silicate compound cannot easily permeate the calcium-containing inorganic material having small pores, such as concrete or the like. In other words, the method is not only incapable of improved prevention of the surface deterioration of concrete but also presents a problem of being complicated in procedure, because it requires cement paste coating after application of a water-soluble silicate compound.

The method described in said Japanese Patent Provisional Publication No. 320284/1989 is adapted to treat the surface of a calcium-containing inorganic material and calls for adding water to a treatment agent containing a magnesium compound and a compound that contains a plurality of carboxyl groups and is selected from the group consisting of organic acids and organic acid salt, said treatment agent also containing either fine granular silica or a water-soluble substance containing silicic acid; and applying or spraying said mixture of water and treatment agent onto the surface of the calcium-containing inorganic material, such as concrete or mortar. Hardening the calcium-containing inorganic material under the presence of the water produces a water-soluble silicic acid compound from the sodium compound, the silica and calcium hydroxide contained in the concrete, while reaction of the organic acid or the organic acid salt with free magnesium ions and calcium ions generates organic magnesium and organic calcium. Because of the capillary phenomenon and the osmotic pressure, the water-soluble silicic acid compound and the organic calcium permeate capillary pores and gaps in the calcium-containing inorganic material, such as concrete. The organic acid or the organic acid salt that has permeated in the inorganic material and remains therein then acts as a catalyst to cause reaction between the water-soluble silicic acid compound and the calcium hydroxide in the calcium-containing inorganic material, such as concrete, thereby generating a compound containing calcium silicate. Furthermore, reaction of the organic magnesium and the organic calcium with the water-soluble silicic acid compound also generates a compound containing calcium silicate. The structure density of the calcium-containing inorganic material is increased with its capillary pores and gaps thus filled.

The treating method disclosed in Japanese Patent Provisional Publication No. 320284/1989, however, has such a drawback that it is difficult for the water-soluble silic acid compound and the organic calcium that have been generated to deeply permeate the capillary pores and the gaps in the calcium-containing inorganic material, such as concrete or the like, because they permeate the capillary pores and the gaps by means of osmotic pressure and/or capillary phenomenon. Furthermore, the condition of the compound containing calcium silicate varies depending on the amount or conditions of the remaining organic acid and the organic acid salt, because they effect the aforementioned reactions and also permeate the capillary pores and the gaps. In other words, the method presents a problem of being complicated in procedure, because it necessitates meticulous setting of mixing ratio as well as precise control of the atmosphere for the reactions. Furthermore, it takes a long period of time to attain a desired hardness and requires operation for protecting the layer formed by application of the agent from damage and water until the layer becomes sufficiently solid.

The method described in said Japanese Patent Provisional Publication No. 43359/1981 calls for coating a base member made of wood, metal, glass or a calcium-containing inorganic material with a hardenable coating agent that is a mixture of a water-soluble or water-dispersible alkali metal silicate glass, a water-soluble base having a greater basicity than that of said alkali metal silicate glass, water, and 5 to 90 vol. % of a pigment by applying said coating agent onto the base member and letting the agent stand until it hardens.

In order to make the color of the pigment more uniform by ensuring thorough dispersion of the pigment, which tends to flocculate, the treating method disclosed in Japanese Patent Provisional Publication No. 43359/1981 calls for making a mixture by mixing a water-soluble or water-dispersible alkali metal silicate glass, which serves to have the base member to support the pigment, with water and a water-soluble base having a greater basicity than that of the alkali metal silicate glass, and then mixing the pigment into the mixture with a volume mixing ratio of 5 to 90%. This method, however, has such a drawback that it does not provide a good color coating layer, because the bond between the calcium-containing inorganic material and the pigment is not strong: a layer of pigment is merely formed on the surface of the inorganic material, and it is not possible for the pigment to enter evenly or supported in the deepest part of the small pores in the calcium-containing inorganic material. Furthermore, not only does it take a long period of time to attain a desired hardness but also requires operation for protecting the layer formed by application of the agent from damage and water until the layer becomes sufficiently solid.

In order to solve the above problems, an object of the present invention is to provide an easy and convenient method of treating the surface of a calcium-containing inorganic material and a treatment agent for use in such a method, said method and agent being capable of easily and quickly increasing the weather resistance and strength of the calcium-containing inorganic material. Another object of the invention is to provide a treatment agent and a method using the same, said agent and method being capable of coloring a calcium-containing inorganic material easily and quickly so as to make the calcium-containing inorganic material strong and weather resistant.

### Disclosure of Invention

An agent for treating the surface of a calcium-containing inorganic material according to the invention includes a base treatment agent in the state of a liquid to be applied onto the surface of a calcium-containing inorganic material in the manner of a thin film, and a base reinforcing agent in the state of a liquid to be applied in the manner of a thin film onto the surface of the coating film of the base treatment agent on the calcium-containing inorganic material, said base treatment agent containing a silica-based powder or granular material generally comprised of silicon oxide (SiO₂), a calcium-containing substance containing either one of or both calcium hydroxide (Ca(OH)₂) and calcium oxide (CaO), water (H₂O), and either one of or both organic acid and organic acid salt which have an acid dissociation exponent (pKa) ranging from 3 to 5, and said base reinforcing agent containing an alkali silicate solution, and either one of or both organic acid and organic acid salt that have an acid dissociation exponent (pKa) ranging from 3 to 5.

The liquid base treatment agent described above is applied onto the surface of a calcium-containing inorganic material in the manner of a thin film. As a result of the application of the base treatment agent, the high surface activity effect and the permeability of either one of or both organic acid and organic acid salt having an acid dissociation exponent (pKa) in the range of 3 to 5 permit the silica-based powder or granular material, which is principally comprised of silicon oxide (SiO₂), and the calcium-containing substance, which contains either one of or both calcium hydroxide (Ca(OH)₂) and calcium oxide (CaO), to permeate deep into open pores of the calcium-containing inorganic material without the potential of forming bubbles or increasing the viscosity. Along with decrease of moisture (H₂O) due to vaporization or other causes, the catalytic action of the organic acid and the organic acid salt and other factors permit silicon oxide contained in the silica-based powder or granular material to generate calcium silicate (CaSiO₃) through reaction with calcium hydroxide in the calcium-containing inorganic material, while the silicon oxide in the silica-based powder or granular material also generates, through pozzolanic reaction with calcium hydroxide in the calcium-containing substance and also with calcium hydroxide generated as a result of combination of water with calcium oxide, CaO-SiO-...-SiO-...-SiO-CaO (C-O-S-O-C), which is an insoluble chain compound, and CaSiO₃ in such a manner that the CaO-SiO-...-SiO-...-SiO-CaO (C-O-S-O-C) and the CaSiO₃ are intertwined with each other. Furthermore, Si-O-Si bonds are formed by hydrogen bonding and dehydro-condensation of silicon oxide with another silicon oxide. By means of these bonds, silicon oxides are connected together into a dense network structure having a plurality of hydroxyl groups (-OH) with a part of the calcium hydroxide molecules enclosed in the network structure. Next, a base reinforcing agent is applied in the manner of a thin film onto the surface of the thin coating film of the base treatment agent having bonds formed into a network structure as described above. As a result of application of the base reinforcing agent, such factors as catalytic action of the organic acid or the organic acid salt having an acid dissociation exponent (pKa) ranging from 3 to 5 and the like cause the alkali silicate to react with calcium hydroxide and silicone oxide that have remained unreacted in such a state as to be enveloped in the network structure of the base treatment agent. The reaction of the alkali silicate produces calcium silicate, C-O-S-O-C and Si-O-Si bonds in such a manner that the alkali in the alkali silicate is enveloped and thus trapped in the network structure, while the network structure formed of the alkali silicate, C-O-S-O-C and Si-O-Si bonds in the base treatment agent is further grown, with its structure density further increased, so that it is integrated with the network structure of the base reinforcing agent. Should the organic acid or the organic acid salt has an acid dissociation exponent (pKa) of less than 3, reaction with the calcium hydroxide (Ca(OH)₂) in the calcium-containing inorganic material following the application of the base treatment agent onto the calcium-containing inorganic material is extremely slow, and formation of a film takes an undesirably long time. On the other hand, an acid dissociation exponent (pKa) exceeding 5 makes reaction with the calcium hydroxide (Ca(OH)₂) in the calcium-containing inorganic material too fast. Such an exceedingly fast reaction results in uneven, partial progress of reaction, which makes formation of a uniform film impossible. Another unfavorable result is substantial contraction action, which may form cracks in the coating film or, in some cases, cause the agent to become powder and peel, making the formation of the film impossible. In order to prevent such problems, an organic acid or an organic acid salt whose acid dissociation exponent (pKa) ranges from 3 to 5, is used according to the invention.

Therefore, even if the calcium hydroxide (Ca(OH)₂) remaining on the surface of the calcium-containing inorganic material has been consumed by reaction and reduced to an insufficiently low quantity along with the elapse of a long period of time after the construction of the structure using said calcium-containing inorganic material, a base treatment agent according to the invention permeates deep into a calcium-containing inorganic material without the potential of forming bubbles or increasing the viscosity and rapidly reacts with the however small quantity of the calcium hydroxide remaining on the surface of the calcium-containing inorganic material and blocks pores with inorganic calcium silicate (CaSiO3) and C-O-S-C, both of which are water resistant as well as weather resistant, and quickly increase the structural density by growing a network structure. Meanwhile, the surface treatment agent according to the invention causes a plurality of hydroxyl groups (-OH) to remain on the surface of the calcium-containing inorganic material so that the surface reinforcing agent allows these hydroxyl groups to react with hydroxyl groups in the base treatment agent, thereby generating water resistant calcium silicate and C-O-S-O-C, which rapidly grow a network structure and thus integrate the coating film densely with the calcium-containing inorganic material. Thus, the surface treatment agent according to the invention is capable of giving the calcium-containing inorganic material onto which the agent is applied great strength and great resistance to weather and water damage easily and quickly by following a simple procedure.

According to another feature of the invention, the surface treatment agent of the invention described above includes a coloring agent in the state of a liquid to be applied in the manner of a thin film onto the surface of a coating film of a base reinforcing agent and containing an alkali silicate solution having a composition according to the invention and described above, a pigment, and either one of or both organic acid and organic acid salt which have an acid dissociation exponent (pKa) ranging from 3 to 5.

As a result of application of a coloring agent onto the surface of a coating film of a base reinforcing agent, which has been integrated with a coating film of a base treatment agent into a dense body by means of a network structure in the manner described above, such factors as catalytic action of the organic acid or the organic acid salt having an acid dissociation exponent (pKa) ranging from 3 to 5 link the alkali silicate with hydroxyl groups (-OH) remaining in the base reinforcing agent and also with C-O-S-O-C bonds and Si-O-Si bonds, thereby growing a dense network structure with the alkali in the alkali silicate and the coloring agent secured in such a manner as to be enveloped and trapped in the network structure and integrating it with the film of the reinforcing agent.

Therefore, even if the calcium hydroxide (Ca(OH)₂) remaining on the surface of the calcium-containing inorganic material has been consumed by reaction and reduced to an insufficiently low quantity along with the elapse of a long period of time after the construction of the structure using said calcium-containing inorganic material, a coloring agent according to the second embodiment is capable of coloring the calcium-containing inorganic material well and virtually evenly in a short period of time while giving it great strength and ability to withstand weather and water. Furthermore, a coloring agent according to the second embodiment also expands the range of usage of the calcium-containing inorganic material by coloring the material so as to improve it from an aesthetic point of view and also make it easy to differentiate.

According to another feature of the invention, at least one of the agents selected from among the base treatment agent, base reinforcing agent, and coloring agent, contains metal oxide.

Mixing metal oxide into at least one of the agents selected from among the base treatment agent, base reinforcing agent, and coloring agent increases the structure density of the network structure and thus provides a strong thin coating film, with the metal oxide entering between and becoming connected with chain compounds of Si-O-Si bonds in the network structure in a three-dimensional state.

Therefore, inclusion of metal oxide has such a benefit as increasing the structure density of the dense network structure even further, and also increasing the weather resistance, the water resistance and the strength of the material.

According to another feature of the invention, the calcium-containing substance in the base treatment agent of the invention described above contains either one of or both calcium hydroxide and calcium oxide at a total weight ratio, which is calculated in terms of calcium hydroxide, of 0.2 to 2 times the weight ratio of the silica-based powder or granular material.

By using a base treatment agent containing a calcium-containing substance which includes calcium hydroxide and calcium oxide at a total weight ratio, which is calculated in terms of calcium hydroxide, of 0.2 to 2 times the weight ratio of the silica-based powder or granular material, a dense network structure can be formed easily and quickly in such a state that the silica-based powder or granular material are firmly linked and integrated with calcium hydroxide (Ca(OH)₂) of the calcium-containing inorganic material and that the calcium hydroxide is enveloped and secured in the network structure while having a plurality of hydroxyl groups (-OH). The weight ratio of calcium-containing substance of less than 0.2 times the weight ratio of the silica-based powder or granular material makes it impossible to attain such objectives as increase in the strength of a film formed of the base treatment agent and also impairs the reactivity of the base treatment agent with the base reinforcing agent, making it impossible to form a coating film having sufficient strength within a short period of time. The calcium-containing substance in a quantity exceeding 2 times the weight ratio of the silica-based powder or granular material causes relative reduction in the number of reaction points where reaction with the calcium-containing inorganic material is conducted and connecting points that form a network structure. This results in reduced strength, water resistance, weather resistance and reactivity with the base reinforcing agent, and makes it impossible to obtain a smooth coating film or conduct the operation easily. Furthermore, it may also present the problem of efflorescence due to calcium moving to the surface of the coating film. In order to prevent these problems, the weight ratio of the calcium-containing substance is limited in the range of 0.2 to 2 times the weight ratio of the silica-based powder or granular material.

Therefore, as the weight ratio of the calcium-containing substance calculated in terms of calcium hydroxide is limited in the range of 0.2 to 2 times the weight ratio of the silica-based powder or granular material, it is easy to form within a short period of time a thin coating film having a dense network structure which can be firmly and integrally connected to a calcium-containing inorganic material and is capable of securing calcium hydroxide in such a manner that the calcium hydroxide is enveloped in the network structure while having a plurality of hydroxyl groups.

According to yet another feature of the invention, the organic acid and the organic acid salt used in the base treatment agent contain at least one kind of organic acid or a salt of an organic acid selected from a group consisting of gluconic acid, spiculisporic acid, lactic acid, acetic acid, propionic acid, and salts of these acids and having a total weight ratio of 0.01 to 0.1 times the total weight ratio of the silica-based powder or granular material and the calcium-containing substance, and either one of or both arabic acid and a salt of arabic acid having a total weight ratio of 0.1 to 0.5 times the total weight ratio of the silica-based powder or granular material and the calcium-containing substance.

As the organic acid and the organic acid salt used in the base treatment agent contain at least one kind of organic acid or a salt of an organic acid selected from a group consisting of gluconic acid, spiculisporic acid, lactic acid, acetic acid, propionic acid, and salts of these acids and having a total weight ratio of 0.01 to 0.1 times the total weight ratio of the silica-based powder or granular material and the calcium-containing substance, and either one of or both arabic acid and a salt of arabic acid having a total weight ratio of 0.1 to 0.5 times the total weight ratio of the silica-based powder or granular material and the calcium-containing substance, the high surface activity effect and other benefits of these organic acids and their salts permit the silica-based powder or granular material and the calcium-containing substance in the base treatment agent to permeate deep into small pores of the calcium-containing inorganic material easily and rapidly and thereby form strong and insoluble bonds without changing the quality of the calcium-containing inorganic material. In cases where the weight ratio of the organic acid and the organic acid salt, which have been selected from a group consisting of gluconic acid, spiculisporic acid, lactic acid, acetic acid, propionic acid and salts of these acids, is less than 0.01 times the total weight ratio of the silica-based powder or granular material and the calcium-containing substance, it is insufficient to enable the proper catalytic action and therefor prevents integration of the base treatment agent with a calcium-containing inorganic material. Furthermore, it impairs proper and sufficient reaction of the silica-based powder or granular material and the calcium-containing substance with the calcium hydroxide (Ca(OH)₂) in the calcium-containing inorganic material, as well as reaction with the base reinforcing agent so that it becomes impossible to give a coating film increased strength, water resistance, weather resistance or ability to permit materials to be thoroughly dispersed therein, and therefore, difficult to obtain a uniform, smooth film or increase the operation efficiency. In cases where the weight ratio of the organic acid and the organic acid salt that have been selected from a group consisting of gluconic acid, spiculisporic acid, lactic acid, acetic acid, propionic acid and salts of these acids exceeds 0.1 times the total weight ratio of the silica-based powder or granular material and the calcium-containing substance, the organic acid and the organic acid salt that did not undergo reaction remain between network structures, making it difficult to obtain a satisfactory strength, water resistance or weather resistance and increasing costs. In order to prevent these problems, the weight ratio of the organic acid and the organic acid salt that have been selected from a group consisting of gluconic acid, spiculisporic acid, lactic acid, acetic acid, propionic acid and salts of these acids is limited in the range of 0.01 to 0.1 times the total weight ratio of the silica-based powder or granular material and the calcium-containing substance. Furthermore, the weight ratio of the arabic acid and the arabic acid salt of less than 0.1 times the total weight ratio of the silica-based powder or granular material and the calcium-containing substance impairs reaction of the silica-based powder or granular material and the calcium-containing substance with the calcium hydroxide (Ca(OH)₂) in the calcium-containing inorganic material, as well as reaction with the base reinforcing agent, and consequently reduces the strength, weather resistance and water resistance. The weight ratio of the arabic acid and the arabic acid salt exceeding 5 times the total weight ratio of the silica-based powder or granular material and the calcium-containing substance causes unreacted organic acid and organic acid salt to remain in the network structure, making it difficult to obtain a satisfactory strength, water resistance or weather resistance and increasing costs. In order to prevent these problems, the weight ratio of the arabic acid and the arabic acid salt is limited in the range of 0.1 to 5 times the total weight ratio of the silica-based powder or granular material and the calcium-containing substance.

Therefore, by using organic acid and salt of organic acid that contain at least one kind of organic acid or a salt of an organic acid selected from a group consisting of gluconic acid, spiculisporic acid, lactic acid, acetic acid, propionic acid, and salts of these acids and having a total weight ratio of 0.01 to 0.1 times the total weight ratio of the silica-based powder or granular material and the calcium-containing substance, and either one of or both arabic acid and a salt of arabic acid having a total weight ratio of 0.1 to 0.5 times the total weight ratio of the silica-based powder or granular material and the calcium-containing substance, a coating film which is smooth and strong and has great ability to withstand water and weather damage can be formed easily and quickly.

According to yet another feature of the invention, the aqueous solution of alkali silicate described above is a 15 to 40 % solution of an alkali silicate, of which the molar ratio of the silicon oxide (SiO₂) to the alkali is in the range of 5 to 7.5.

As a result of using a 15 to 40 % aqueous solution of an alkali silicate, of which the molar ratio of the silicon oxide (SiO₂) to the alkali is in the range of 5 to 7.5, alkali silicate becomes connected with hydroxyl groups, C-O-S-O-C bonds and Si-O-Si bonds in a thin film of a base treatment agent within a short period of time, thereby growing a dense network structure, while bonds among alkali silicate rapidly proceeds. A molar ratio of the silicon oxide (SiO₂) to the alkali of less than 5 overly increases the amount of alkali that has to be enveloped and thus remaining in a network structure, and, therefore, makes it impossible to continue to retain all the alkali. As a result, it becomes impossible to increase the strength, water resistance or weather resistance. A molar ratio of the silicon oxide (SiO₂) to the alkali exceeding 7.5 reduces reactivity of the silicon oxide with the base treatment agent and impairs structural integration and growth of the network structure. Therefore, the molar ratio of silicon oxide (SiO₂) to the alkali is limited in the range of 5 to 7.5. In cases where the aqueous solution of an alkali silicate has a concentration of less than 15 %, the absolute quantity of the alkali silicate is insufficient to properly react with a base treatment agent, and there arises the need to increase the amount of application. Increasing the application amount, however, also increases the possibility of dripping or other undesirable problems and necessitates application of an agent in multiple layers, consequently reducing the operation efficiency and increasing the cost of operation. In addition, as the quantity of residual alkali that is trapped and thus remain in the three-dimensional network structure increases, it becomes impossible to continue to trap the alkali, resulting in reduced strength, water resistance and weather resistance. An alkali silicate solution having a concentration of more than 40 % does not have a sufficient water content and causes the alkali silicate to start to be linked with each other before application of the agent and also increases the viscosity of the agent. Therefore, not only is it impossible to obtain a smooth coating film but the operation efficiency is also reduced. In order to prevent such problems, the concentration of the aqueous solution of alkali silicate is limited in the range of 15 to 40 %.

As described above, by using a 15 to 40 % solution of an alkali silicate whose molar ratio of the silicon oxide (SiO₂) to the alkali is in the range of 5 to 7.5, a dense, integral network structure can be obtained easily in a short period of time through a rapid and easy reaction with a base treatment agent.

According to yet another feature of the invention, the metal oxide mentioned above has a weight ratio of 0.1 to 5 times the weight ratio of the alkali silicate solution remaining after the weight of water has been subtracted.

Inclusion of metal oxide at a weight ratio of 0.1 to 5 times that of the alkali silicate solution remaining after the weight of water has been subtracted forms a dense, three-dimensions network structure, because molecules of the metal oxide rapidly enter between the chain compounds of the Si-O-Si bonds in the existing network structure and connects them together. The weight ratio of the metal oxide is limited in the range of 0.1 to 5 times the weight ratio of the aqueous solution of alkali silicate remaining after the weight of water has been subtracted, because metal oxide less than 0.1 times the weight ratio of the alkali silicate solution remaining after the weight of water has been subtracted coarsens the dense bond of the three-dimensional network structure and makes it impossible to increase the strength, water resistance or weather resistance of the treated object, while metal oxide having a weight ratio exceeding 5 times the weight ratio of the alkali silicate solution remaining after the weight of water has been subtracted causes gelation of the agent, thereby reducing its preservability and increasing costs.

As described above, inclusion of metal oxide at a weight ratio ranging from 0.1 to 5 times the weight ratio of the alkali silicate solution remaining after the weight of water has been subtracted has such a benefit as increasing the structure density of the dense network structure even further, and also increasing the weather resistance, the water resistance and the strength of the material.

According to yet another feature of the invention, the organic acid and the organic acid salt used in either one of or both the base reinforcing agent and color agent contain at least one kind of organic acid or a salt of an organic acid selected from a group consisting of gluconic acid, spiculisporic acid, lactic acid, acetic acid, propionic acid, and salts of these acids and having a total weight ratio of 0.01 to 0.1 times the weight ratio of the alkali silicate solution remaining after the weight of water has been subtracted, and either one of or both arabic acid and a salt of arabic acid having a total weight ratio of 0.1 to 0.5 times the weight ratio of the alkali silicate solution remaining after the weight of water has been subtracted.

As the organic acid and the organic acid salt used in either one of or both the base reinforcing agent and color agent contains at least one kind of organic acid or a salt of an organic acid selected from a group consisting of gluconic acid, spiculisporic acid, lactic acid, acetic acid, propionic acid, and salts of these acids and having a total weight ratio of 0.01 to 0.1 times the weight ratio of the alkali silicate solution remaining after the weight of water has been subtracted, and either one of or both arabic acid and a salt of arabic acid having a total weight ratio of 0.1 to 0.5 times the weight ratio of the alkali silicate solution remaining after the weight of water has been subtracted, alkali silicate is allowed to be connected with such substances in a thin film of a base treatment agent or a base reinforcing agent as hydroxyl groups (-OH), calcium hydroxide (Ca(OH)₂), C-O-S-O-C bonds and Si-O-Si bonds within a short period of time, thereby growing a dense network structure, while bonding among alkali silicate molecules rapidly proceeds. Therefore, a calcium-containing inorganic material can be given great strength as well as great resistance to weather and water damage easily and quickly. A weight ratio of the organic acid and the organic acid salt that have been selected from a group consisting of gluconic acid, spiculisporic acid, lactic acid, acetic acid, propionic acid and salts of these acids of less than 0.01 times the weight ratio of the alkali silicate solution remaining after the weight of water has been subtracted impairs the reactivity of the alkali silicate with the base treatment agent as well as inter-reaction of the alkali silicate molecules and consequently reduces the degree of integration of the coating films. Therefore, it becomes impossible to increase the strength, water resistance, weather resistance or dispersibility of materials and, consequently, it becomes difficult to obtain a uniform, smooth film or increase the operation efficiency. In cases where the weight ratio of the organic acid and the organic acid salt that have been selected from a group consisting of gluconic acid, spiculisporic acid, lactic acid, acetic acid, propionic acid and salts of these acids exceeds 0.1 times the weight ratio of the alkali silicate solution remaining after the weight of water has been subtracted, unreacted organic acid and organic acid salt remain in a network structure so that it is difficult to obtain satisfactory strength or resistance to water or weather damage or avoid cost increase. In order to prevent these problems, the weight ratio of the organic acid and the organic acid salt that have been selected from a group consisting of gluconic acid, spiculisporic acid, lactic acid, acetic acid, propionic acid and salts of these acids is limited in the range of 0.01 to 0.1 times the weight ratio of the alkali silicate solution remaining after the weight of water has been subtracted. Furthermore, the weight ratio of the arabic acid and the arabic acid salt of less than 0.1 times the weight ratio of the alkali silicate solution remaining after the weight of water has been subtracted impairs proper progress of reaction of the alkali silicate with the base treatment agent and the base reinforcing agent as well as inter-reaction among the alkali silicate molecules and consequently makes it impossible to increase the strength or the resistance to water and weather damage. The weight ratio of the arabic acid and the arabic acid salt exceeding 5 times the weight ratio of the alkali silicate solution remaining after the weight of water has been subtracted causes unreacted organic acid and organic acid salt to remain in the network structure, making it difficult to obtain satisfactory strength or resistance to water or weather damage and also presenting the problem of cost increase. In order to prevent these problems, the weight ratio of the arabic acid and the arabic acid salt is limited in the range of 0.1 to 5 times the weight ratio of the alkali silicate solution remaining after the weight of water has been subtracted.

Therefore, by using organic acids and salt of organic acids that contain at least one kind of organic acid or a salt of an organic acid selected from a group consisting of gluconic acid, spiculisporic acid, lactic acid, acetic acid, propionic acid, and salts of these acids and having a total weight ratio of 0.01 to 0.1 times the weight ratio of the alkali silicate solution remaining after the weight of water has been subtracted, and either one of or both arabic acid and a salt of arabic acid having a total weight ratio of 0.1 to 0.5 times the weight ratio of the alkali silicate solution remaining after the weight of water has been subtracted, a coating film which is smooth and strong and has great resistance to weather and water damage can be formed easily and quickly.

According to yet another feature thereof, an agent according to the invention contains a pigment.

By including a pigment in a base treatment agent, the pigment enters deep into small open pores of the calcium-containing inorganic material because of such factors as the surface activity of the organic acid and the organic acid salt and secured in such a manner as to be enveloped between molecules of calcium silicate (CaSiO₃) and in the network structure without the potential of the pigment peeling off or being otherwise removed from the surface of the calcium-containing inorganic material so that the calcium-containing inorganic material is colored well and virtually evenly. As a result, the resistance to weather and water damage and the strength of the calcium-containing inorganic material are increased, while the range of its usage is expanded, because coloring the inorganic material improves it from an aesthetic point of view and also makes it easy to differentiate. By including a pigment in a base reinforcing agent, the pigment is enveloped and secured without the potential of the pigment peeling off or being otherwise removed from the surface of the calcium-containing inorganic material at the time of reaction of the base reinforcing agent with the base treatment agent, so that the calcium-containing inorganic material is colored well and virtually evenly. As a result, the resistance to weather and water damage and the strength of the calcium-containing inorganic material are increased, while the range of its usage is expanded, because coloring the inorganic material improves it from an aesthetic point of view and also makes it easy to differentiate. Using a base treatment agent and a base reinforcing agent respectively containing pigments provides a surface treatment agent having a superior coloring capability in that it enables the complex coloring as well as gradation coloring, thereby improving the calcium-containing inorganic material even further from an aesthetic point of view and also making it easier to differentiate.

As described above, a surface treatment agent containing a pigment or pigments ensures reliable enveloping of the pigment(s) without the potential of inadvertently peeling off or being otherwise removed from the surface of the calcium-containing inorganic material, and is capable of coloring the calcium-containing inorganic material well and virtually evenly, thereby improving it from an aesthetic point of view, making it easy to differentiate and consequently expanding the range of usage of the calcium-containing inorganic material.

According to yet another feature thereof, the pigment according to the invention described above is an inorganic pigment having a weight ratio ranging from 0.1 to 12 times the weight ratio of the alkali silicate solution remaining after the weight of water has been subtracted.

By using an inorganic pigment having a weight ratio ranging from 0.1 to 12 times the weight ratio of the alkali silicate solution remaining after the weight of water has been subtracted as a pigment to be contained in an agent, a good, virtually even and beautifully colored coating film which has great strength and resistance to weather and water damage and is easy to differentiate can be formed on a calcium-containing inorganic material easily and without the potential of the coating film peeling off or being otherwise removed from the surface of the calcium-containing inorganic material. A pigment having a weight ratio of less than 0.1 times the weight ratio of the alkali silicate solution remaining after the weight of water has been subtracted reduces the coloring ability of the agent and necessitates a thick film in order to obtain a desired color. A thick coating film, however, presents the potential of peeling off and results in reduced operation efficiency and increase in costs. In cases where the weight ratio of a pigment exceeds 12 times the weight ratio of the alkali silicate solution remaining after the weight of water has been subtracted, a part of the pigment fails to be securely enveloped in the network structure. Such an excessive pigment not only presents the possibility of seeping out and impairing formation of a network structure but also increases costs while being unable to increase the coloring ability of the agent. Using an organic pigment makes it difficult to increase the weather resistance and also presents the potential of impairing formation of a network structure. Therefore, according to the invention, an inorganic pigment is used at a ratio ranging from 0.1 to 12 times the weight ratio of the alkali silicate solution remaining after the weight of water has been subtracted.

As described above, by using an inorganic pigment having a weight ratio ranging from 0.1 to 12 times the weight ratio of the alkali silicate solution remaining after the weight of water has been subtracted as a pigment to be contained in an agent, a good, virtually even and beautifully colored coating film which has great strength and resistance to weather and water damage and is easy to differentiate can be formed on a calcium-containing inorganic material easily and without the potential of the coating film peeling off or being otherwise removed from the surface of the calcium-containing inorganic material.

According to yet another feature of the invention, either one of or both the base reinforcing agent and coloring agent described above contain porous, amorphous silica-based powder at the mixing ration ranging from 1.0 to 15 times the weight ratio of the alkali silicate solution remaining after the weight of water has been subtracted.

As a result of inclusion of porous, amorphous silica-based powder at the mixing ration ranging from 1.0 to 15 times the weight ratio of the alkali silicate solution remaining after the weight of water has been subtracted in either one of or both the base reinforcing agent and coloring agent, the porous, amorphous silica-based powder reacts with calcium hydroxide and silicone oxide that have remained in the unreacted state, thereby generating calcium silicate, as well as C-O-S-O-C and Si-O-Si bonds so that a dense network structure is grown while contraction that otherwise occurs when the network structure is formed is limited. Thus, small cracks are prevented from being formed on the surface of the coating film. Therefore, a good, thin coating film which is smoother and lustrous can be obtained. When the weight ratio of the porous, amorphous silica-based powder is less than 1.0 times the weight ratio of the alkali silicate solution remaining after the weight of water has been subtracted, the film cannot be made smoother, because it is impossible to limit contraction and therefore impossible to prevent cracks. The weight ratio of the porous, amorphous silica-based powder exceeding 15 times the weight ratio of the alkali silicate solution remaining after the weight of water has been subtracted increases the viscosity of the agent, which is not only inconvenient to conduct operation of forming a coating film but also results in a thicker coating film and increased costs. In order to prevent these problems, the weight ratio of the porous, amorphous silica-based powder is limited in the range of 1.0 to 15 times the weight ratio of the alkali silicate solution remaining after the weight of water has been subtracted.

As described above, inclusion of porous, amorphous silica-based powder in either one of or both the base reinforcing agent and coloring agent at the mixing ratio ranging from 1.0 to 15 times the weight ratio of the alkali silicate solution remaining after the weight of water has been subtracted enables the prevention of formation of small cracks on the surface of the coating film by limiting contraction, which otherwise occurs when the network structure is formed, and thus provides a good, thin coating film which is smoother and lustrous.

According to yet another feature of the invention, after a thin coating film of the base treatment agent of a surface treatment agent of the invention that is adapted to treat the surface of a calcium containing inorganic material and has compositions described above is formed by applying said base treatment agent onto the surface of a calcium containing inorganic material, the base reinforcing agent of said surface treatment agent for treating the surface of a calcium containing inorganic material is applied in the manner of a thin film onto the surface of said thin coating film of the base treatment agent.

As a thin coating film of the base reinforcing agent of a surface treatment agent for treating the surface of a calcium containing inorganic material is formed by applying the base reinforcing agent onto the surface of a thin coating film formed by applying the base treatment agent of said surface treatment agent onto the surface of a calcium containing inorganic material, various treatment operations, such as one for preventing surface deterioration of a calcium-containing inorganic material or coloring a calcium-containing inorganic material can be conducted easily with increased efficiency.

As described above, a method according to the invention enables the easy treatment of the surface of a calcium containing inorganic material, such as one for preventing surface deterioration or coloring, and increases the operation efficiency, because the method merely calls for applying a base treatment agent and then applying a base reinforcing agent onto the coating of the base treatment agent.

A method according to another feature of the invention calls for applying said base treatment agent of the surface treatment agent for treating the surface of a calcium containing inorganic material onto the surface of a calcium containing inorganic material, thereby forming a thin film of the base treatment agent; then applying said base reinforcing agent of the surface treatment agent for treating the surface of a calcium containing inorganic material onto the surface of said coating film of the base treatment agent, thereby forming a thin film of the base reinforcing agent; and, thereafter, applying said coloring agent onto the surface of said coating film of the base reinforcing agent, thereby forming a thin film of the coloring agent.

As a thin coating film of the base reinforcing agent is formed by applying the base reinforcing agent onto the surface of a thin coating film that has been formed by applying the base treatment agent of a surface treatment agent for treating the surface of a calcium containing inorganic material onto the surface of a calcium containing inorganic material, and a thin coating film of the coloring agent is then formed by applying the coloring agent onto the surface of the thin coating film of the base reinforcing agent, various treatment operations, such as one for preventing surface deterioration of a calcium-containing inorganic material or coloring a calcium-containing inorganic material can be conducted easily with increased efficiency.

As described above, a method according to the invention enables the easy treatment of the surface of a calcium containing inorganic material, such as one for preventing surface deterioration or coloring and increases the operation efficiency, merely by conducting application of a base treatment agent, a base reinforcing agent and a coloring agent in sequence.

### Best Mode for Carrying Out the Invention

In order to explain the invention in detail, a first embodiment of the invention is explained hereunder.

The agent for treating the surface of a calcium-containing inorganic material of the invention is a two-liquid type agent consisting of a liquid base treatment agent in the state of a water slurry and a base reinforcing agent in the state of a liquid.

The base treatment agent mentioned above is a mixture generally comprised of a silica-based powder or granular material generally comprised of silicon oxide (SiO₂), a calcium-containing substance such as lime, cement or the like, water (H₂O), and either one of or both organic acid and organic acid salt, wherein said calcium-containing substance contains either one of or both calcium hydroxide (Ca(OH)₂) and a calcium oxide (CaO), and the acid dissociation exponent (pKa) of any one of the organic acids or the organic acid salts ranges between 3 and 5.

Examples of silica-based powder or granular material used for the composition and generally comprised of silicon oxide (SiO₂) include silica fume, silica rock and calcined pearlite. These materials may desirably undergo a dehydration-thermal treatment to enhance activity of silicon oxide contained therein. Foam-expanded calcined pearlite is particularly preferable because of its high potential for reaction and ability to prevent cracks by limiting contraction of the film when it is formed. Silica fume in the state of generally spherical fine particles is also desirable, because it requires less water to be added and thus facilitates treatment operation. A silica-based powder or granular material used for the composition desirably has a particle diameter of not greater than 5.0 µm, because silica-based particles whose diameter is greater than 5.0 µm tend to form protrusions on the film and impairs formation of a smooth film.

Examples of a calcium-containing substance that contains either one of or both calcium hydroxide (Ca(OH)₂) and calcium oxide (CaO) include calcium hydroxide, calcium oxide, and cement. Calcium hydroxide is particularly desirable, because it is easy to handle and adjust a mixing proportion.

Examples of organic acids and organic acid salts to be used as the aforementioned organic acid and organic acid salt having an acid dissociation exponent (pKa) ranging from 3 to 5 include gluconic acid, spiculisporic acid, lactic acid, acetic acid, propionic acid, arabic acid and the like, as well as salts of these acids (particularly calcium salt), each and every one of which has an acid dissociation exponent (pKa) ranging from 3 to 5. Any one of these acids or salts may be used singularly or as a mixture with other organic acids or their salts mentioned in this paragraph.

An organic acid or a salt of an organic acid having an acid dissociation exponent (pKa) of less than 3 tremendously slows down various reactions that follow application of the base treatment agent onto the calcium-containing inorganic material, such as reaction of the agent with the calcium hydroxide (Ca(OH)₂) in the calcium-containing inorganic material, reaction between the silica-based powder or granular material and the calcium-containing substance, and reaction for condensation polymerization to form a three-dimensional network structure. Such a delay in reaction tremendously increases the time required to form a coating film and reduces the operation efficiency. An acid dissociation exponent (pKa) exceeding 5 overly accelerates such reactions as reaction of the agent with the calcium hydroxide (Ca(OH)₂) in the calcium-containing inorganic material, reaction between the silica-based powder or granular material and the calcium-containing substance, and reaction for condensation polymerization to form a three-dimensional network structure. Such an exceedingly fast reaction results in uneven, partial progress of reaction, which prevents formation of a uniform film. Another unfavorable result is substantial contraction action, which may form cracks in the coating film or, in some cases, cause the agent to become powdered and peel, making the formation of the film entirely impossible. In order to prevent such problems, an organic acid or an organic acid salt whose acid dissociation exponent (pKa) ranges from 3 to 5 is used according to the invention.

A base treatment agent is produced as a slurry-like aqueous solution by mixing a silica-based powder or granular material; a calcium-containing substance having a weight ratio of 0.2 to 2 times that of the silica-based powder or granular material; at least one kind of organic acid or a salt of organic acid having a total weight ratio of 0.01 to 0.1 times the total weight ratio of the silica-based powder or granular material and the calcium-containing substance and selected from a group consisting of gluconic acid, spiculisporic acid, lactic acid, acetic acid, propionic acid and salts of these acids, each of which has an acid dissociation exponent (pKa) ranging from 3 to 5; arabic acid and/or a salt of arabic acid having a total weight ratio of 0.1 to 0.5 times the total weight ratio of the silica-based powder or granular material and the calcium-containing substance; and an appropriate quantity of water.

The weight ratio of calcium-containing substance in terms of calcium hydroxide of less than 0.2 times the weight ratio of the silica-based powder or granular material makes it impossible to attain such objectives as increase in the strength of a film formed of the base treatment agent and also impairs the reactivity of the base treatment agent with the base reinforcing agent, preventing a coating film having sufficient strength from being formed within a short period of time. In cases where the weight ratio of the calcium-containing substance exceeds 2 times the weight ratio of the silica-based powder or granular material, relative decrease in the weight ratio of the silica-based powder or granular material reduces reaction points where reaction with the calcium-containing inorganic material progress and connecting points to form a network structure, resulting in reduced strength, resistance to weather and water damage, and reactivity with the base reinforcing agent. This makes it impossible to obtain a satisfactory coating film, because such an agent is not only unable to form a smooth film or facilitate application operation but may also present the problem of efflorescence. In order to prevent these problems, it is desirable to limit the weight ratio of the calcium-containing substance in terms of calcium hydroxide in the range of 0.2 to 2 times that of the silica-based powder or granular material.

When the weight ratio of the organic acid and the organic acid salt that have been selected from a group consisting of gluconic acid, spiculisporic acid, lactic acid, acetic acid, propionic acid and salts of these acids is less than 0.01 times the total weight ratio of the silica-based powder or granular material and the calcium-containing substance, it impairs integral bonding of the agent with the calcium-containing inorganic material, because it is difficult for the silica-based powder or granular material and the calcium-containing substance to enter deep into small open pores of the calcium-containing inorganic material. Furthermore, it impairs proper and sufficient reaction of the silica-based powder or granular material and the calcium-containing substance with the calcium hydroxide (Ca(OH)₂) in the calcium-containing inorganic material, as well as their reaction with the base reinforcing agent. Therefore, it becomes impossible to increase the strength, resistance to weather or water damage or dispersibility of materials and consequently difficult to obtain a uniform, smooth film or increase the operation efficiency. In cases where the weight ratio of the organic acid and the organic acid salt that have been selected from a group consisting of gluconic acid, spiculisporic acid, lactic acid, acetic acid, propionic acid and salts of these acids exceeds 0.1 times the total weight ratio of the silica-based powder or granular material and the calcium-containing substance, unreacted organic acid and organic acid salt remain in a network structures, making it difficult to obtain satisfactory strength, weather resistance or water resistance, and also presenting the problem of cost increase. In order to prevent these problems, it is desirable to limit the weight ratio of the organic acid and the organic acid salt that have been selected from a group consisting of gluconic acid, spiculisporic acid, lactic acid, acetic acid, propionic acid and salts of these acids in the range of 0.01 to 0.1 times the total weight ratio of the silica-based powder or granular material and the calcium-containing substance.

Furthermore, the weight ratio of the arabic acid and the arabic acid salt of less than 0.1 times the total weight ratio of the silica-based powder or granular material and the calcium-containing substance impairs reaction of the silica-based powder or granular material and the calcium-containing substance with the calcium hydroxide (Ca(OH)₂) in the calcium-containing inorganic material, as well as their reaction with the base reinforcing agent so that it is impossible to increase the strength or resistance to weather or water damage. The weight ratio of the arabic acid and the arabic acid salt exceeding 5 times the total weight ratio of the silica-based powder or granular material and the calcium-containing substance causes unreacted organic acid and organic acid salt to remain in the network structure, making it difficult to obtain satisfactory strength, weather resistance or water resistance, and also presenting the problem of cost increase. In order to prevent these problems, it is desirable to limit the weight ratio of the arabic acid and the arabic acid salt in the range of 0.1 to 5 times the total weight ratio of the silica-based powder or granular material and the calcium-containing substance.

All of the above organic acids and organic acid salts are water soluble, mixed thoroughly with a silica-based powder or granular material and a calcium-containing substance, have surface activity effect, are highly permeative into a calcium-containing inorganic material without changing the quality of the calcium-containing inorganic material, and are free from the potential of viscosity increase when mixed with a silica-based powder or granular material and a calcium-containing substance because they are capable of suppressing formation of bubbles. Thus, every one of the aforementioned organic acids or their salts is capable of functioning as an excellent carrier during permeation into a calcium-containing inorganic material.

The base reinforcing agent mentioned above is a mixture generally comprised of an aqueous solution of an alkali silicate and either one of or both organic acid and organic acid salt having an acid dissociation exponent (pKa) ranging from 3 to 5.

Examples of alkali silicate used for the aforementioned alkali silicate solution include sodium silicate, lithium silicate, potassium silicate and so on, of which sodium silicate is preferable, because it is easily available and inexpensive. Because of its great resistance to water damage, lithium silicate is a preferable choice, in cases where great resistance to water is particularly required.

The molar ratio of silicon oxide (SiO₂) to the alkali (M₂O) in the alkali silicate mentioned above is preferably from 5 to 7.5, wherein M represents lithium (li), potassium (K), sodium (Na) or cesium (Cs). A molar ratio of the silicon oxide (SiO₂) to the alkali (M₂O) of less than 5 increases alkali remaining in a network structure formed by chemical reaction resulting from application of the base reinforcing agent. Therefore, it becomes impossible to increase the strength and the weather resistance of the calcium-containing inorganic material. A molar ratio of the silicon oxide (SiO₂) to the alkali (M₂O) exceeding 7.5 overly enhances condensation polymerization reaction between silicon oxide molecules, often resulting in flocculation and powderization as well as increase in the viscosity of the agent, thereby reducing the reactivity with the base treatment agent and impairing structural integration and growth of network structure. Therefore, it is desirable to limit the molar ratio of silicon oxide (SiO₂) to the alkali (M₂O) in the range of 5 to 7.5.

The aforementioned aqueous solution of an alkali silicate is a 15 to 40 % solution of an alkali silicate. In cases where the concentration of the aqueous solution of an alkali silicate is less than 15 %, the absolute quantity of the alkali silicate is insufficient to properly react with a base treatment agent, and it is therefore necessary to increase the amount applied in order to attain a desired strength and resistance to weather and water damage. On the other hand, increasing the amount of the agent applied also increases the possibility of dripping or other undesirable problems. In order to prevent dripping or such problems, it is necessary to apply the agent in several layers. This, however, complicates application operation and may result in increase in costs. In addition, increase in the strength or resistance to weather or water damage cannot be expected, because residual alkali trapped and thus remaining in the three-dimensional network structure, too, increases. An alkali silicate solution having a concentration of more than 40 % does not have a sufficient water content and may initiate bonding among alkali silicate molecules before application of the agent. As such a bond increases the viscosity of the agent and makes it difficult to obtain a smooth film, it presents the possibility of impairing the operation efficiency. Therefore, it is desirable to limit the concentration of the aqueous solution of alkali silicate in the range of 15 to 40 %.

As is true in a base treatment agent, examples organic acids and organic acid salts to be used as the aforementioned organic acid and organic acid salt having an acid dissociation exponent (pKa) ranging from 3 to 5 include gluconic acid, spiculisporic acid, lactic acid, acetic acid, propionic acid, arabic acid and the like, as well as salts of these acids (particularly calcium salt), each and every one of which has an acid dissociation exponent (pKa) ranging from 3 to 5. Any one of these acids or salts may be used singularly or as a mixture with other organic acids or their salts mentioned in this paragraph.

When an organic acid or a salt of an organic acid used for the composition has an acid dissociation exponent (pKa) of less than 3, various reactions that follow the application of the base reinforcing agent onto the base treatment agent, such as reaction between the base reinforcing agent and the base treatment agent and inter-reaction among alkali silicate molecules, become extremely slow. Such a delay in reaction tremendously increases the time required to form a coating film and reduces the operation efficiency. An acid dissociation exponent (pKa) exceeding 5 excessively speeds up various reactions, such as reaction between the base reinforcing agent and the base treatment agent and reaction between the molecules of the alkali silicate and causes uneven, partial progress of reaction, which impairs formation of a uniform film. Another unfavorable result is substantial contraction action, which may form cracks in the coating film or, in some cases, cause the agent to become powdered and peel, making the formation of the film entirely impossible. In order to prevent such problems, organic acid and organic acid salt whose acid dissociation exponent (pKa) ranges from 3 to 5, are used according to the invention.

A base reinforcing agent is produced by mixing the aforementioned aqueous solution of an alkali silicate and organic acid and/or organic acid salt having an acid dissociation exponent (pKa) ranging from 3 to 5 at appropriate mixing proportions, wherein said organic acid and organic acid salt are comprised of at least one kind of organic acid or a salt of an organic acid selected from a group consisting of gluconic acid, spiculisporic acid, lactic acid, acetic acid, propionic acid and salts of these acids having a total weight ratio of 0.01 to 0.1 times the weight ratio the of the aqueous solution of the alkali silicate remaining after the weight of water has been subtracted, and either one of or both an arabic acid and a salt of arabic acid having a total weight ratio of 0.1 to 0.5 times the weight ratio of the alkali silicate solution remaining after the weight of water has been subtracted.

When the weight ratio of the organic acid and the salt of the organic acid that have been selected from a group consisting of gluconic acid, spiculisporic acid, lactic acid, acetic acid, propionic acid and salts of these acids is less than 0.01 times the weight ratio of the alkali silicate solution remaining after the weight of water has been subtracted, it impairs proper progress of reaction of the alkali silicate with the base treatment agent and reaction among alkali silicate molecules, making it impossible to attain such objectives as forming an integral body with the base treatment agent, increasing the strength, resistance to weather and water damage or dispersion of materials. As a result, it becomes difficult to obtain a virtually even, smooth coating film or increase the operation efficiency. On the other hand, in cases where the weight ratio of the organic acid and the organic acid salt that have been selected from a group consisting of gluconic acid, spiculisporic acid, lactic acid, acetic acid, propionic acid and salts of these acids exceeds 0.1 times the weight ratio of the alkali silicate solution remaining after the weight of water has been subtracted, unreacted organic acid and organic acid salt remain between network structures, making it difficult to obtain satisfactory strength, weather resistance or water resistance, and also presenting the problem of cost increase. In order to prevent these problems, it is desirable to limit the weight ratio of the organic acid and the organic acid salt that have been selected from a group consisting of gluconic acid, spiculisporic acid, lactic acid, acetic acid, propionic acid and salts of these acids in the range of 0.01 to 0.1 times the weight ratio of the alkali silicate solution remaining after the weight of water has been subtracted.

Furthermore, when the weight ratio of the arabic acid and the arabic acid salt is less than 0.1 times the weight ratio of the alkali silicate solution remaining after the weight of water has been subtracted, it impairs reaction between the alkali silicate and the base treatment agent as well as reaction between alkali silicate molecules, making it impossible to attain such objectives as forming an integral body with the base treatment agent, increasing the strength or the resistance to weather and water damage. On the other hand, in cases where the weight ratio of the arabic acid and the arabic acid salt exceeds 5 times the weight ratio of the alkali silicate solution remaining after the weight of water has been subtracted, unreacted organic acid and organic acid salt remain in the network structure, making it difficult to obtain satisfactory strength, weather resistance or water resistance, and also presenting the problem of cost increase. In order to prevent these problems, it is desirable to limit the weight ratio of the arabic acid and the arabic acid salt in the range of 0.1 to 5 times the weight ratio of the alkali silicate solution remaining after the weight of water has been subtracted.

All of the above organic acids and organic acid salts are mixed thoroughly with an aqueous solution of an alkali silicate without the potential of forming bubbles or increasing the viscosity of the agent.

Next, the function of the first embodiment described above is explained hereunder.

A surface treatment agent for a calcium-containing inorganic material consists of a base treatment agent and a base reinforcing agent, each of which has been produced by mixing materials and contained in a separate package beforehand. The base treatment agent, which contains 5 to 25 % solids, is applied onto a calcium-containing inorganic material, such as concrete or mortar. To be more precise, approximately 6 to 8 kg/m² of the agent is applied by spraying or with a brush, a roller or the like so as to form a coating film having a thickness of about 2.0 to 20 µm, and the coating film is then let dry. At that time, it is desirable to limit the thickness of the coating film in the range of about 2.0 to 20 µm, because a film thinner than 0.2 µm does not have sufficient strength, while a film thicker than 20 µm not only presents the potential of peeling off but also increases costs due to excessive and wasteful consumption of the agent.

In cases where there are pollutants or laitance on the surface of the calcium-containing inorganic material, the surface has to be cleaned and polished beforehand by using a sander or any other appropriate means.

Upon application of the agent, the silica-based powder or granular material and the calcium-containing substance gradually permeate from openings of open pores and cracks into the deep part of the calcium-containing inorganic material because of the surface activity effect, the permeability and the dispersibility of the organic acid and the organic acid salt having an acid dissociation exponent (pKa) ranging from 3 to 5.

Immediately after the application of the agent, calcium hydroxide (Ca(OH)₂) contained in the calcium-containing substance and calcium hydroxide (Ca(OH)₂) generated by reaction of the calcium oxide with water initiate pozzolanic reaction with silicon oxide contained in the silica-based powder or granular material, thereby starting to generate water-resistant calcium silicate (CaSiO₃). Meanwhile, a part of the silicon oxide in the silica-based powder or granular material that has permeated in the calcium-containing inorganic material becomes silicic acid, which is then polymerized principally by the catalytic action of the organic acid and the organic acid salt. As the polymerized silicic acid starts pozzolanic reaction with the calcium hydroxide in the calcium-containing substance, which has permeated together with silica-based powder or granular material, CaO-SiO-...-SiO-...-SiO-CaO (C-O-S-O-C), which is an insoluble chain compound, is generated in such a manner as to intertwine with the calcium silicate. Meanwhile, a three-dimensional network structure is formed by a Si-O-Si bond resulting from hydrogen bonding or dehydro-condensation of silicon oxide with another silicon oxide in the silica-based powder or granular material.

When the thin, film-like coating of the base treatment agent is completely dry, a part of the calcium hydroxide in the calcium-containing substance is secured in such a state as to be enveloped in the network structure mentioned above. Therefore, even if the amount of calcium hydroxide remaining on the surface of the calcium-containing inorganic material is reduced after a long period of time, a plurality of hydroxyl groups that are generated from the base treatment agent still remain.

As the inorganic calcium silicate produced in the pores and the aforementioned network structure block the pores, the resistance to weather and water damage, structure density, and, consequently, the strength of the inorganic material are increased.

A base reinforcing agent is then applied onto the surface of the coating film of the base treatment agent and let dry. Like the base treatment agent, the base reinforcing agent may be applied by any appropriate means. The quantity of the base reinforcing agent containing 15 to 30 % solids to be applied each time is limited in the range of about 8 to 15 m²/kg (from 66 g/m² to 125 g/m²) so as to form a film having a thickness ranging from 2.0 to 5.0 µm. At that time, it is desirable to limit the thickness of a coating film in the range of 2.0 to 5.0 µm, because a film thinner than 0.2 µm does not have sufficient strength, while a film thicker than 5 µm increases excessive and wasteful consumption of the agent.

Application of the base reinforcing agent further increases the strength of the coating film of the base treatment agent described above by forming it into a three-dimensional network structure having an increased density.

To be more precise, as a result of application of the agent, such factors as catalytic action of the organic acid and/or the organic acid salt having an acid dissociation exponent (pKa) ranging from 3 to 5 and the like cause the alkali silicate in the base reinforcing agent to react with calcium hydroxide and silicone oxide that have remained unreacted in such a state as to be enveloped in the network structure of the base treatment agent, thereby generating water-resistant and weather resistant calcium silicate and insoluble C-O-S-O-C. The alkali silicate also grows the network structure by means of reaction with hydroxyl groups in the base treatment agent, as well as C-O-S-O-C bonds and Si-O-Si bonds that constitute a network structure in the agent, while Si-O-Si bonds are formed by inter-reaction among alkali silicate molecules and grow the network structure even further. Yet another function of the alkali silicate is to grow the network structure by means of reaction with silicone oxide that has remained unreacted in the silica-based powder or granular material in the coating film of the base treatment agent. Furthermore, as the alkali silicate also reacts so as to be interposed between silicon oxide molecules that have remained unreacted, the density of the network structure is increased. As a result of these reactions, the base reinforcing agent becomes integrated with the base treatment agent and constitutes a complex three-dimensional network structure having a sufficient structural density.

In cases where treatment of a calcium-containing inorganic material, such as concrete, which contains only a little amount of calcium hydroxide (Ca(OH)₂) remaining on the surface of the calcium-containing inorganic material due to the elapse of a long period of time after the construction of the structure using said calcium-containing inorganic material is conducted by merely applying a conventional treatment agent which is generally comprised of an alkali silicate onto the surface of the calcium-containing inorganic material, such a conventional treatment agent does not react properly to form a strong network structure, and is therefore unable to form a good coating film having sufficient water resistance.

The base treatment agent of a surface treatment agent described above, however, permeates deep into a calcium-containing inorganic material without forming bubbles or increasing the viscosity and rapidly reacts with however small a quantity of the calcium hydroxide remaining on the surface of the calcium-containing inorganic material and blocks pores with inorganic calcium silicate (CaSiO3) and C-O-S-C, both of which have resistance to weather and water damage, and quickly increases the structural density by growing a network structure. Meanwhile, the base treatment agent permits a plurality of hydroxyl groups (-OH) to remain on the surface of the calcium-containing inorganic material so that the base reinforcing agent causes these hydroxyl groups to react with hydroxyl groups in the base treatment agent, thereby generating water resistant calcium silicate and C-O-S-O-C, which rapidly grow a network structure and thus integrate the coating film densely with the calcium-containing inorganic material. Thus, the surface treatment agent according to the invention is capable of easily and rapidly increasing the strength and resistance to weather and water damage of a calcium-containing inorganic material.

The surface treatment agent is also capable of preventing surface deterioration of a calcium-containing inorganic material by reducing heat deterioration which may result from acid rain or fire and, in cases where the calcium-containing inorganic material is concrete, reducing efflorescence which is characteristic of concrete.

Either one of or both the base treatment agent and the base reinforcing agent of a surface treatment agent according to the first embodiment described above may contain a pigment.

Examples of pigments mentioned above include various inorganic pigments, such as zinc yellow, red lead, chrome yellow, cadmium red, cadmium yellow, cobalt blue, viridian, white lead, ultramarine, titanium oxide, black iron oxide, red iron oxide, alumina white, titanium black, lithopone and carbon black, and organic pigments, such as alizarin lake, indanthrene blue, eosine lake, quinacridone red, quinacridone violet, copper phthalocyanine type pigments, naphthol green and diamond black. Regardless of whether it is a natural pigment or a synthetic product, any pigment may be used. An inorganic pigment which is both alkali resistant and weather resistant is particularly desirable.

In cases where a base treatment agent contains a pigment, the pigment is permitted to enter together with the silica-based powder or granular material and the calcium-containing substance deep into small open pores of the calcium-containing inorganic material and secured in such a manner as to be enveloped and supported in the network structure and between molecules of calcium silicate (CaSiO₃) that have been generated. Therefore, the calcium-containing inorganic material is colored well and virtually evenly without the potential of the pigment peeling off or being otherwise removed from the surface of the calcium-containing inorganic material. As a result, the resistance to weather and water damage and the strength of the calcium-containing inorganic material are increased, while the range of its usage is expanded, because coloring the inorganic material improves it from an aesthetic point of view and also makes it easy to differentiate.

In cases where a base treatment agent containing a pigment is used for treating a calcium-containing inorganic material whose open pores are small, such as concrete, the pigment is used in the form of very fine powder (preferably 0.5 µm or less) in order to assure the pigment to properly permeate into the pores. Although pigment powder having a particle diameter of less than 0.5 µm tends to flocculate, the pigment is ensured to be mixed and dispersed virtually evenly without the potential of flocculation, because the organic acid or the organic acid used has an excellent dispersibility, having an acid dissociation exponent (pKa) ranging from 3 to 5. Therefore, the pigment is capable of permeating deep into small open pores of the calcium-containing inorganic material and firmly secured in the network structure. Thus, a coating film which is colored in an excellent condition is obtained.

When the base reinforcing agent containing a pigment reacts with the base treatment agent, the three-dimensional network structure that grows with the pigment intertwining therewith envelopes and secures the pigment therein. Therefore, the calcium-containing inorganic material is colored well and virtually evenly without the potential of the pigment peeling off or being otherwise removed from the surface of the calcium-containing inorganic material. As a result, the resistance to weather and water damage and the strength of the calcium-containing inorganic material are increased, while the range of its usage is expanded, because coloring the inorganic material improves it from an aesthetic point of view and also makes it easy to differentiate. For the same reason as that for a pigment contained in a base treatment agent, a pigment contained in a base reinforcing agent, too, may desirably have a particle diameter of not more than 0.5 µm in order to ensure the pigment to be supported and secured by the network structure in such as state as being enveloped therein.

Using a base treatment agent and a base reinforcing agent respectively containing pigments provides a surface treatment agent having a superior coloring capability as it enables the complicated coloring as well as gradation coloring, thereby improving a calcium-containing inorganic material to be treated even further from an aesthetic point of view and also making it easier to differentiate.

As described above, a surface treatment agent containing a pigment or pigments ensures reliable enveloping of the pigment(s) without the potential of the pigment(s) peeling off or being otherwise removed from the surface of the calcium-containing inorganic material, and is capable of coloring the calcium-containing inorganic material well and virtually evenly, thereby improving it from an aesthetic point of view, making it easy to differentiate and consequently expanding the range of usage of the calcium-containing inorganic material.

A surface treatment agent for a calcium-containing inorganic material having the compositions described above may contain metal oxide, such as zinc oxide, aluminum oxide, titanium oxide, magnesium oxide, etc. Silicon oxide is particularly preferable because of its high reactivity.

In cases where a base treatment agent contains metal oxide, its weight ratio has to be in the range of 0.1 to 5 times the total weight ratio of the silica-based powder or granular material and the calcium-containing substance. In cases where a base reinforcing agent contains metal oxide, its weight ratio has to be in the range of 0.1 to 5 times the weight ratio of the aqueous solution of alkali silicate remaining after the weight of water has been subtracted. Metal oxide whose weight ratio is less than 0.1 times the total weight ratio of the silica-based powder or granular material and the calcium-containing substance or the weight ratio of the alkali silicate solution remaining after the weight of water has been subtracted reduces bridging bonds between the chain compounds of the Si-O-Si bonds in the network structure so that further increase in the strength, weather resistance or water resistance cannot be attained. In cases where the metal oxide has a weight ratio exceeding 5 times the total weight ratio of the silica-based powder or granular material and the calcium-containing substance or the weight ratio of the alkali silicate solution remaining after the weight of water has been subtracted, a part of the metal oxide is not involved in linking the chain compounds and remains in the network structure. Such excessive metal oxide not only makes it impossible to attain such objectives as increases in the strength, weather resistance or water resistance of the treated material but also causes the color of the metal oxide to tint the coating film, thereby impairing satisfactory coloring and increasing costs. In order to prevent these problems, it is desirable to limit the weight ratio of the metal oxide used in the range of 0.1 to 5 times the total weight ratio of the silica-based powder or granular material and the calcium-containing substance or the weight ratio of the aqueous solution of alkali silicate remaining after the weight of water has been subtracted.

Inclusion of metal oxide further increases the structure density of the network structure, because the metal oxide rapidly enters between the chain compounds of the Si-O-Si bonds in the network structure and connects them by way of Si-O-M-O-Si bonds, wherein M represents the metal.

As described above, inclusion of metal oxide has such a benefit as further increasing the structure density of the already dense network structure, and also increasing the strength and resistance to weather and water damage of the material.

A base reinforcing agent may contain porous, amorphous silica-based powder. Examples of the silica-based powder mentioned above include pearlite powder, diatomaceous earth, silica gel powder, mica, etc., of which calcined pearlite powder is particularly preferable.

As a result of inclusion of porous, amorphous silica-based powder, the porous, amorphous silica-based powder reacts with calcium hydroxide and silicone oxide that have remained in the unreacted state, thereby generating calcium silicate, C-O-S-O-C and Si-O-Si bonds and thus growing a dense, three-dimensional network structure, while limiting contraction that otherwise occurs when the network structure is formed and thus preventing formation of small cracks on the surface of the coating film. Therefore, a good, thin coating film which is smoother and lustrous can be obtained.

When using porous, amorphous silica-based powder, it is desirable to limit the weight ratio of the porous, amorphous silica-based powder in the range of 1.0 to 15 times the weight ratio of the alkali silicate solution remaining after the weight of water has been subtracted. When the weight ratio of the porous, amorphous silica-based powder is less than 1.0 times the weight ratio of the alkali silicate solution remaining after the weight of water has been subtracted, the film cannot be made smoother, because it is impossible to limit contraction and therefore impossible to prevent cracks. The porous, amorphous silica-based powder exceeding 15 times the weight ratio of the alkali silicate solution remaining after the weight of water has been subtracted increase the viscosity of the agent, which is not only inconvenient to conduct operation of forming a coating film but also increases the thickness of a coating film and consequently increasing costs. In order to prevent these problems, the weight ratio of the porous, amorphous silica-based powder is limited in the range of 1.0 to 15 times the weight ratio of the alkali silicate solution remaining after the weight of water has been subtracted.

Next, another embodiment of the present invention, which is referred to the second embodiment hereinafter, is explained hereunder.

The agent for treating the surface of a calcium-containing inorganic material according to the second embodiment is a three-liquid coloring type agent comprised of a coloring agent in addition to a two-liquid type agent for treating the surface of a calcium-containing inorganic material according to the first embodiment described above.

In other words, the agent is a three-liquid type agent comprised of a base treatment agent and a base reinforcing agent according to the first embodiment described above and, in addition to these two agents, a coloring agent to be applied onto a coating film of the base reinforcing agent.

The coloring agent mentioned above is a liquid mixture generally comprised of a silica-based solution (an aqueous solution), a pigment, and either one of or both organic acid and organic acid salt, wherein the acid dissociation exponent (pKa) of any one of the organic acids or the organic acid salts used ranges from 3 to 5.

In the same manner as a base reinforcing agent, the aqueous solution of an alkali silicate may desirably be a 15 to 40 % solution of an alkali silicate, of which the molar ratio of silicon oxide (SiO₂) to the alkali (M₂O) is limited in the range of 5 to 7.5. Criteria for use of organic acids and organic acid salts salt having an acid dissociation exponent (pKa) ranging from 3 to 5 are also the same as those for a base reinforcing agent: it is desirable that a mixture of at least one of acids and their salts having a weight ratio ranging from 0.01 to 0.1 times the weight ratio of the alkali silicate solution remaining after the weight of water has been subtracted and selected from among gluconic acid, spiculisporic acid, lactic acid, acetic acid, propionic acid and salts of these acids, and either one of or both arabic acid and a salt of arabic acid having a total weight ratio ranging from 0. 1 to 5 times the weight ratio of the alkali silicate solution remaining after the weight of water has been subtracted.

As described above, any pigment can be used regardless of whether it is an organic pigment or an inorganic pigment or whether it is a natural pigment or a synthetic product. However, for this embodiment, too, an inorganic pigment which is both alkali resistant and weather resistant is preferable.

Approximately 7 to 8 m²/kg of coloring agent having the composition described above is sprayed or applied with a brush, a roller or the like onto the surface of a coating film of a base reinforcing agent so as to form a coating film having a thickness ranging from 10 to 20 µm, and the coating film is then let dry. By repeating such an application process, the thickness of the color coating film can be increased.

Application of the coloring agent onto the surface of a base reinforcing agent, which has been applied in the manner of a thin film and integrated with a base treatment agent into a dense body by means of a network structure, initiates a catalytic action of the organic acid and the organic acid salt having an acid dissociation exponent (pKa) ranging from 3 to 5 so that the alkali silicate is bonded with hydroxyl groups (-OH) in the base reinforcing agents and also with C-O-S-O-C bonds and Si-O-Si bonds, which constitute a network structure, and alkali silicate molecules themselves are bonded together. As a result, a three-dimensional dense network structure grows with the alkali in the alkali silicate and the coloring agent secured in such a manner as to be enveloped in the network structure and becomes integrated with the film of the reinforcing agent. Thus, a colored coating film having a dense, complex network structure in which a pigment is enveloped is formed.

Therefore, even if the amount of calcium hydroxide (Ca(OH)₂) remaining on the surface of the calcium-containing inorganic material is reduced due to the elapse of a long period of time after the construction of the structure using said calcium-containing inorganic material, a coloring agent according to the second embodiment is capable of coloring the calcium-containing inorganic material well and virtually evenly in a short period of time while giving it great strength and resistance to weather and water damage. Furthermore, a coloring agent according to the second embodiment also expands the range of usage of the calcium-containing inorganic material by coloring the material so as to improve it from an aesthetic point of view and also make it easy to differentiate.

Depending on manners of application of a coloring agent, it is possible to color a material in a distinguishable way so that the colored material can be used as a division marker or a wall painting. Thus, a surface treatment agent according to the second embodiment expands the range of usage of the material to which it is applied.

In the same manner as the first embodiment, either one of or both base reinforcing agent and a coloring agent may contain porous, amorphous silica-based powder, such as pearlite powder, diatomaceous earth, silica gel powder, mica, etc.

As a result of inclusion of porous, amorphous silica-based powder, the porous, amorphous silica-based powder reacts with calcium hydroxide and silicone oxide that have remained in the unreacted state, thereby generating calcium silicate, C-O-S-O-C and Si-O-Si bonds and thus growing a dense, three-dimensional network structure, while limiting contraction that otherwise occurs when the network structure is formed and thus preventing formation of small cracks on the surface of the coating film. Therefore, a good, thin coating film which is smoother and lustrous can be obtained.

As explained above, it is desirable to limit the weight ratio of the porous, amorphous silica-based powder in the range of 1.0 to 15 times the weight ratio of the alkali silicate solution remaining after the weight of water has been subtracted.

Next, explained hereunder is an experimental treatment of the surface of a calcium-containing inorganic material according to the invention described above, wherein concrete was used as the inorganic material to be treated.

The calcium-containing inorganic material used for this experiment was concrete which had been produced according to the proportions shown in Table 1, with surface treatment tests being conducted by using pieces of this concrete. Each sample piece was produced by forming a piece having dimensions of 20 cm X 20 cm X 3 cm according to the proportions shown in Table 1, placing the piece in the moist atmosphere at 25 °C for two days, submerging it in water at 20 °C for seven days and then drying and curing them in a room at 25 °C and 65% RH.

**[Table 1]**

| Raw Material | Quantity (Kg/m³) |
|---|---|
| Unit cement* | 180 |
| Calcium carbonate | 120 |
| Fine aggregate | 803 |
| Coarse aggregate | 944 |
| Water | 195 |
| Slump (cm) | 21 |

| | |
|---|---|
| *Unit cement = a quantity of cement necessary to produce 1m³ of concrete | |

Firstly, tests were conducted to examine a base treatment agent: base treatment agents shown in Table 2 were produced by mixing various raw materials in appropriate proportions, and each treatment agent was applied with a brush and dried at ordinary temperature in ordinary atmospheric environment (25 °C and 50 % humidity).

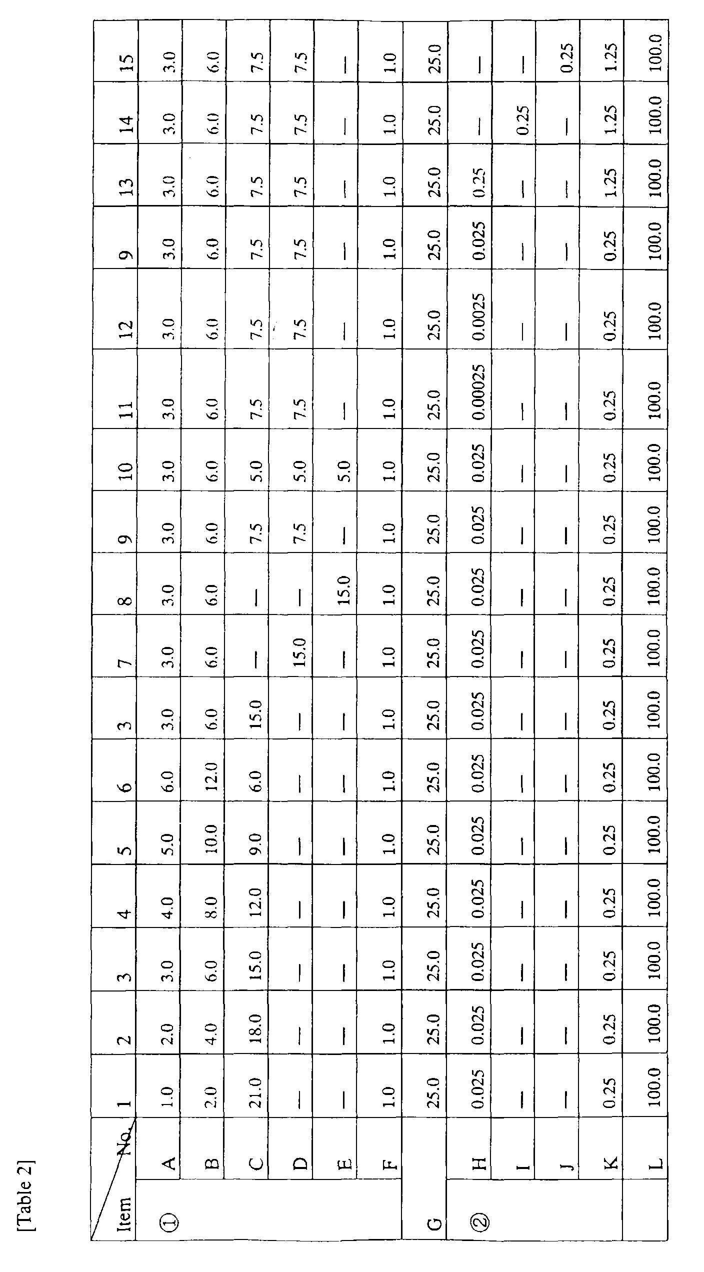

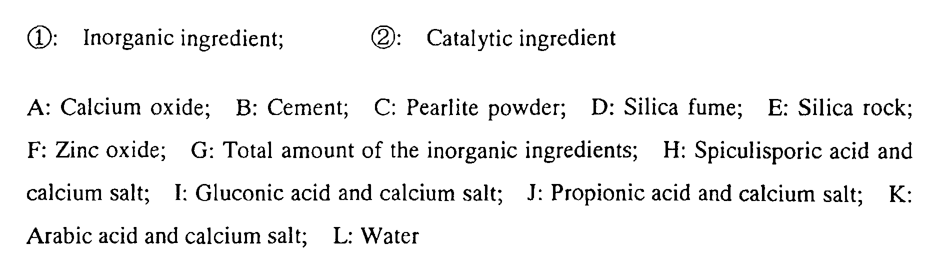

The tests were conducted to evaluate the strength, water resistance, reactivity with concrete and ease of operation of the coating film of each sample. The evaluation of each characteristic was conducted based on four categories shown in Table 3. The results are shown in Table 4.

**[Table 3]**

| Evaluation Criteria | Smoothness | Strength | Water Resistance | Reactivity | Ease of Operation |
|---|---|---|---|---|---|
| ⓞ | No craters on the surface | No scars when scratched with a 100-yen coin | Does not dissolve if rubbed after submerged in water | Set to touch within 30 minutes | Very smooth |
| ○ | No conspicuous craters on the surface | No scars when scratched with a 10-yen coin | Does not dissolve after submerged in water | Set to touch within 60 minutes | Smooth |
| △ | A few protrusions and indentation | Slightly scarred when scratched with a 10-yen coin | Becomes slightly slimy after submerged in water | can be set to touch within 2 hours | Operation interrupted by stand-by periods |
| X | Bumpy and having craters | Scarred when scratched with a 10-yen coin | Dissolves in water | Not solid enough to touch even after 2 hours | Smooth, but unevenly coated |

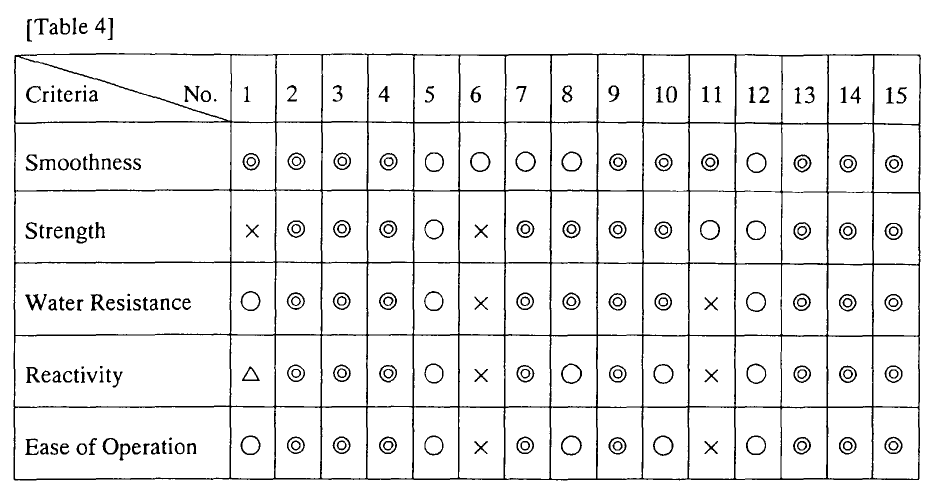

As is seen from the above results in Table 4, Composition Nos. 2 - 5, each of which contained a calcium-containing substance comprised of calcium compounds, i.e. calcium hydroxide and calcium oxide, having a total weight ratio in terms of calcium hydroxide ranging from 0.2 to 2 times that of the silica-based powder or granular material was not only easy to conduct application operation but also showed high reactivity: a strong, smooth coating film which had great resistance to water and was solid enough to touch was formed on the concrete 30 minutes after the application of the agent. Composition Nos. 2 - 4 showed particularly satisfactory results. Composition No. 1, which contained a calcium-containing substance at a weight ratio in terms of calcium hydroxide of less than 0.2 times that of the silica-based powder or granular material, was also easy to conduct application operation and produced a smooth coating film. On the other hand, it presented drawbacks such that the strength of the film was insufficient and that it took a considerable time to conduct application operation due to its poor reactivity with concrete: it took approximately two hours to dry.

From the results described above, it is evidently necessary to limit the weight ratio of a calcium-containing substance in terms of calcium hydroxide within the range of 0.2 to 2 times that of the silica-based powder or granular material.

Tests were conducted by varying the kind of the silica-based powder or granular material used, according to the same mixing proportions as Sample 3, because Sample 3 showed the best result. As is seen from the results, using pearlite powder resulted in further increase in the smoothness, reactivity and working efficiency. However, Composition No. 9 which used silica fume in combination with pearlite powder produced the best coating film, reducing the moisture content even further.

Tests were conducted by varying the ratio of the organic acids and/or the organic acid salts used while maintaining the same mixing proportions of the other ingredients as those of Composition No. 9. Composition Nos. 9 and 13, each of which contained spiculisporic acid and its calcium salt at a weight ratio ranging from 0.01 to 0.1 times the total weight ratio of the silica-based powder or granular material and the calcium-containing substance and arabic acid and its salt at a weight ratio ranging from 0.1 to 5 times the total weight ratio of the silica-based powder or granular material and the calcium-containing substance, produced good coating films.

Composition No. 14, which used gluconic acid and its calcium salt having an acid dissociation exponent (pKa) ranging from 3 to 5 in place of the spiculisporic acid and its calcium salt used in Composition No. 13, and Composition No. 15, which used propionic acid and its calcium salt having an acid dissociation exponent (pKa) ranging from 3 to 5 in place of the spiculisporic acid and its calcium salt of Composition No. 13, also provided good coating films.

Furthermore, tests conducted by varying weight ratio of zinc oxide proved that a good coating film can be obtained when the weight ratio of the zinc oxide to the total solids content is in the range from 1:25 to 5:25.

Next, tests were conducted to examine a base reinforcing agent to evaluate the strength of the coating film, water resistance, reactivity with concrete and operation efficiency of each sample. A base treatment agent having the same composition as Composition No. 9, which showed the best result, was used for these test and applied with a brush onto concrete.

For the base reinforcing agent used for these tests, 20 % alkali silicate solutions having various SiO₂/Na₂O molar ratios were prepared. Each solution was produced by mixing 30 % aqueous solution of sodium silicate having the SiO₂/Na₂O ratio of 4.0, 40 % aqueous solution of methyl amine-containing sodium silicate having the SiO₂/Na₂O ratio of 4.0 and purified water (ion-exchange water) according to the proportions shown in Table 5. Each sample of base reinforcing agent containing said 20 % alkali silicate solution and other ingredients according to the proportions shown in Table 6 was then by applied with a brush and a roller onto the surface of the base treatment agent of each respective sample piece. The results are shown in Table 7.

**[Table 5]**

| | | | | | |
|---|---|---|---|---|---|
| SnO₂/Na2O molar ratio of 20 % alkali silicate solution | 4.0 | 5.0 | 6.0 | 7.5 | 9.0 |
| 30 % sodium silicate having molar ratio of 4.0 | 100 | 100 | 100 | 100 | 100 |
| 40 % methyl amine-containing silicate with 4.0 molar ratio | - | 18 | 36 | 63 | 90 |
| Purified water | 50 | 67 | 74 | 117 | 164 |

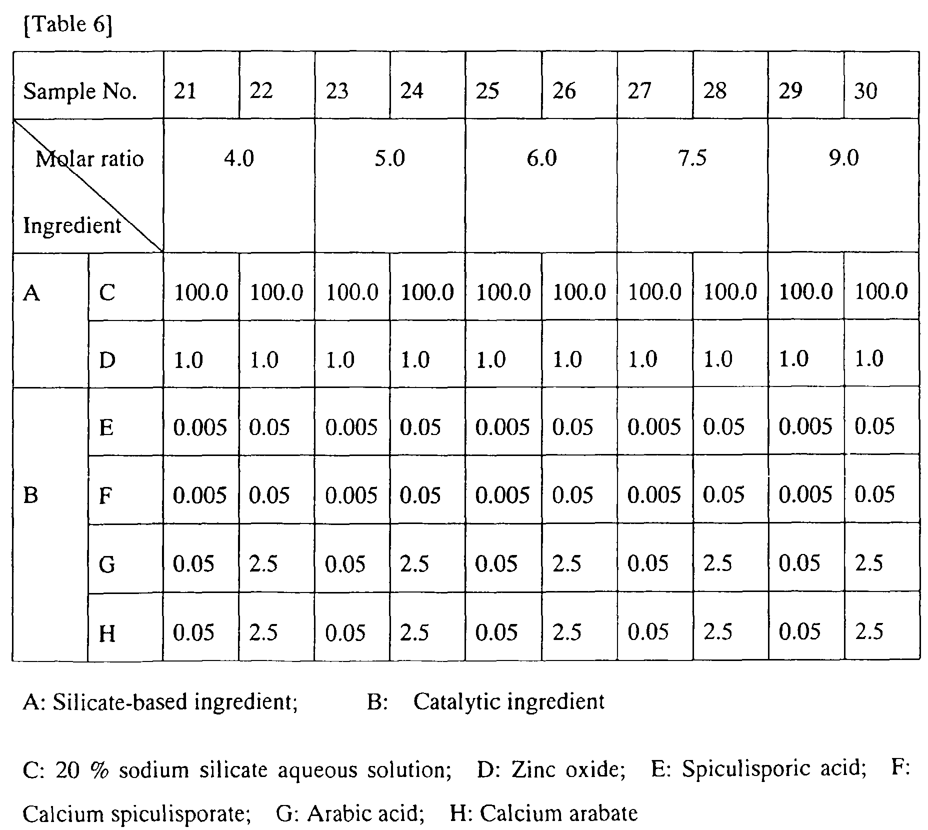

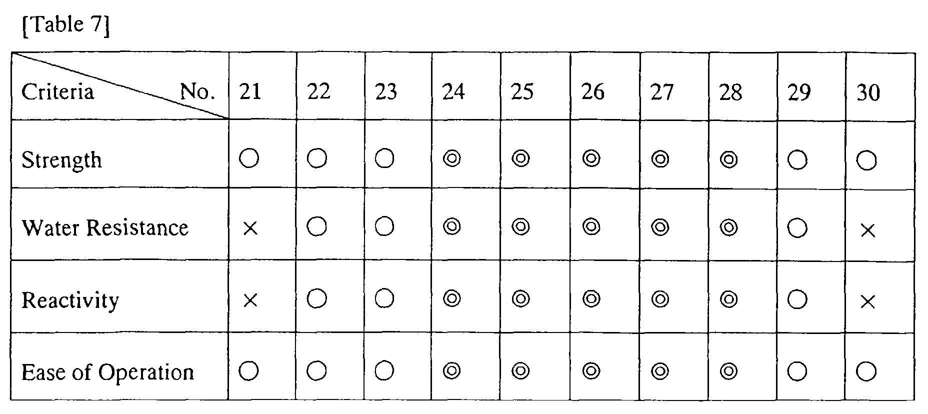

As is seen from the above results in Table 7, of Composition Nos. 23 - 28, each of which had a SiO₂/Na₂O ratio in the range of 5.0 to 7.5, Composition Nos. 24 - 28, each of which contained an organic acid and a salt of an organic acid, i.e. spiculisporic acid and its calcium salt, at a weight ratio ranging from 0.01 to 0.1 times the weight ratio of the alkali silicate solution remaining after the weight of water has been subtracted and arabic acid and its salt at a weight ratio ranging from 0.1 to 5 times the weight ratio of the alkali silicate solution remaining after the weight of water has been subtracted, produced good coating films. Of the samples having a SiO₂/Na₂O ratio of 4.0, Composition No. 22 having a greater proportion of organic acids and salts of organic acids showed particularly satisfactory results. Of the samples having a SiO₂/Na₂O ratio of 9.0, Composition No. 29 having a relatively small proportion of organic acids and salts of organic acids showed superior results. The above result suggests that condensation polymerization reaction among silicon oxide molecules progresses rapidly in a composition containing silicon oxide in a great ratio so that catalytic action of organic acids and salts of organic acids is not apparent.

Furthermore, results of tests involving zinc oxide used as the metal oxide have proved that a particularly good coating film can be obtained when the ratio of zinc oxide is in the range of 1.0 to 5.0 times the weight ratio of an aqueous solution of sodium silicate remaining after the weight of water has been subtracted.

Next, a coloring agent was examined according to the same manner as above. 20 % alkali silicate solutions having various SiO₂/Na₂O molar ratios were used as alkali silicates for these tests. Each solution was produced by mixing 30 % aqueous solution of sodium silicate having a SiO₂/Na₂O ratio of 4.0, 40 % aqueous solution of methyl amine-containing sodium silicate having a SiO₂/Na₂O ratio of 4.0, and purified water (ion-exchange water) according to the proportions shown in Table 8. Red iron oxide was used as the pigment. Pearlite powder having a particle diameter ranging from 0.5 µm to 5 µm was mixed in each composition as porous, amorphous silica-based powder that served as a surface smoothing agent. A base treatment agent having the same composition as Composition No. 9, which had shown the best result, was used for these test and applied onto concrete with a brush. A base reinforcing agent having the same composition as Composition No. 24, which had shown the best result, was used for these test and likewise applied onto the surface of the base treatment agent of each respective sample piece. Each sample of coloring agent containing various ingredients according to the proportions shown in Table 9 was then applied with a brush and a roller onto the surface of the base reinforcing agent of each respective sample piece. The evaluation of the samples was conducted based on three levels shown in Tables 3 and 10. The results are shown in Table 11.

**[Table 8]**

| | | | | |
|---|---|---|---|---|
| SnO_{2/}Na2O molar ratio of 20 % alkali silicate solution | 4.0 | 5.0 | 7.5 | 9.0 |
| 30 % sodium silicate having molar ratio of 4.0 | 100 | 100 | 100 | 100 |
| 40 % methyl amine-containing silicate with 4.0 molar ratio | - | 18 | 63 | 90 |
| Purified water | 50 | 67 | 117 | 164 |

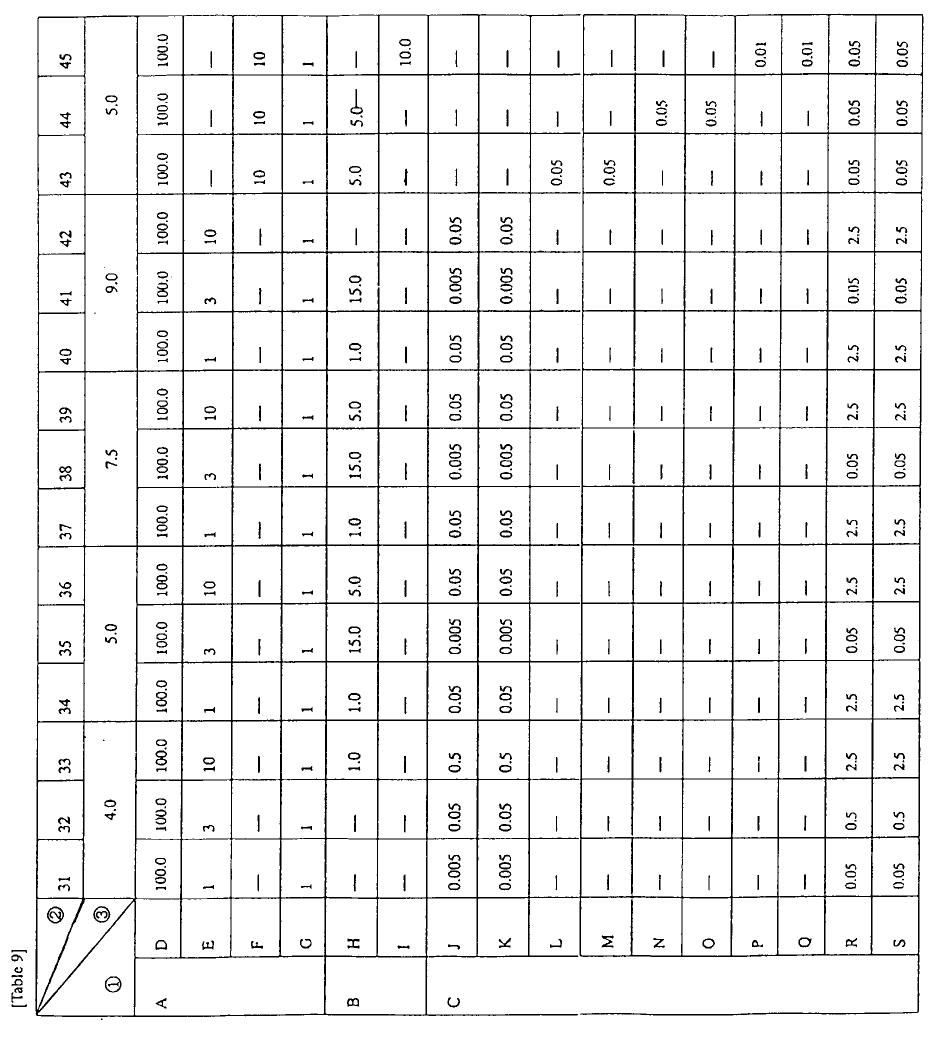

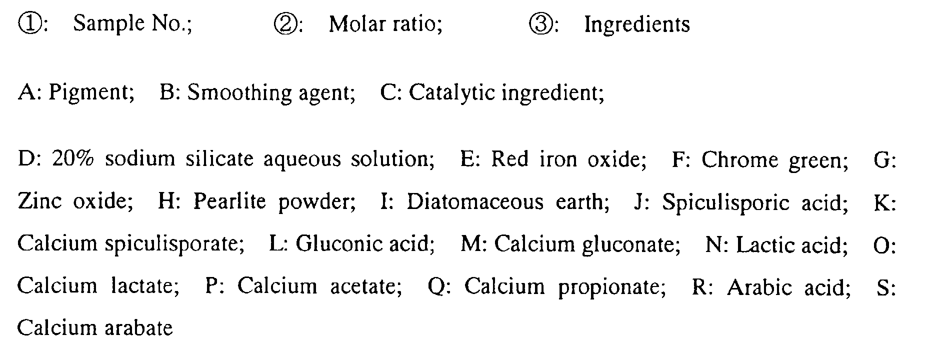

**[Table 10]**

| Evaluation Criteria | Surface smoothness | Luster and tinting ability |
|---|---|---|
| X | Not satisfactorily smooth with cracks on the surface | Poorly tinted |
| ○ | Smooth with no cracks on the surface | Lustrous and good coloring |
| ⓞ | Very smooth with no cracks on the surface | Excellent luster and coloring: looks shiny |

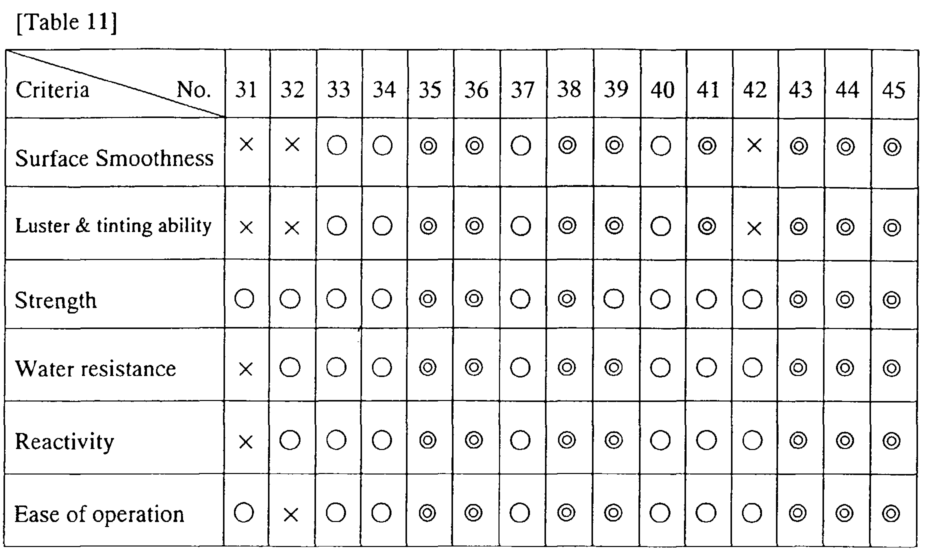

As is seen from Table 11 shown above, the results show a similarity to those of the tests on the base reinforcing agent: of Composition Nos. 34 - 39, each of which had a SiO₂/Na₂O ratio in the range of 5.0 to 7.5, Composition Nos. 35, 36, 38, 39, 43 - 45, each of which contained an organic acid and a salt of an organic acid, i.e. spiculisporic acid and its calcium salt, at a weight ratio ranging from 0.01 to 0.1 times the weight ratio of an aqueous solution of sodium silicate remaining after the weight of water has been subtracted and arabic acid and its salt at a weight ratio ranging from 0.1 to 5 times the weight ratio of an aqueous solution of sodium silicate remaining after the weight of water has been subtracted, produced particularly good coating films.

As is seen from the results of Composition Nos. 31 - 33 and 40 - 42, adding porous, amorphous silica-based powder having a particle diameter ranging from 0.5 µm to 5 µm at the weight ratio ranging from 1.0 to 15.0 times the weight ratio of an aqueous solution of sodium silicate remaining after the weight of water has been subtracted prevents cracks on the surface of a coating film and thus produces a good coating film having a lustrous and very smooth surface. Both calcined pearlite powder and diatomaceous earth produced good coating films with no apparent difference in their surface smoothness or luster.

As is seen from the results of Composition Nos. 43 - 45, coating films that were as good as those obtained by using spiculisporic acid and its salt were obtained by an agent having the same composition as any one of said compositions except that a combination of gluconic acid and its salt, a combination of lactic acid and its salt, a salt of acetic acid (used singularly), or a salt of propionic acid (used singularly) were used in place of spiculisporic acid and its salt on condition that any one of these organic acids and their salts had an acid dissociation exponent (pKa) ranging from 3 to 5.

Like the base reinforcing agent, of the samples having a SiO₂/Na₂O ratio of 4.0, Composition No. 33 having a greater proportion of organic acids and salts of organic acids showed particularly satisfactory results. Among the samples having a SiO₂/Na₂O ratio of 9.0, however, differences in ratios of the organic acids and their salts did not produce remarkable difference in the results. This seems to be attributed to the fact that the organic acids used had virtually the same acid dissociation exponent. Furthermore using mica as the porous, amorphous silica-based powder also resulted in a good film having a quite lustrous and smooth surface.

### Industrial Applicability

As described above, a surface treatment agent and a method for treating the surface of a calcium-containing inorganic material according to the present invention are applicable to coloring or treatment for prevention of deterioration of the surface of a calcium-containing inorganic material, which may be such a structure as a building or a viaduct, or concrete or mortar used in a door sill, an earthen floor, joints between tiles or the like.

## Claims

1. A surface treatment agent for treating a calcium-containing inorganic material including:
a base treatment agent in the state of a liquid to be applied onto the surface of a calcium-containing inorganic material in the manner of a thin film, said base treatment agent containing:
a silica-based powder or granular material generally comprised of silicon oxide (SiO₂),
a calcium-containing substance containing either one of or both calcium hydroxide (Ca(OH)₂) and calcium oxide (CaO),
either one of or both organic acid and organic acid salt which have an acid dissociation exponent (pKa) ranging from 3 to 5, and
water (H₂O); and
a base reinforcing agent in the state of a liquid to be applied in the manner of a thin film onto the surface of the coating film of the base treatment agent on the calcium-containing inorganic material, said base reinforcing agent containing:
an alkali silicate solution, and
either one of or both organic acid and organic acid salt that have an acid dissociation exponent (pKa) ranging from 3 to 5.

2. A surface treatment agent for treating a calcium-containing inorganic material as claimed in claim 1, wherein said surface treatment agent includes a coloring agent in the state of a liquid containing an aqueous solution of alkali silicate, a pigment, and either one of or both organic acid and organic acid salt which have an acid dissociation exponent (pKa) ranging from 3 to 5, said coloring agent adapted to be applied in the manner of a thin film onto the surface of a coating film of said base reinforcing agent.

3. A surface treatment agent for treating a calcium-containing inorganic material as claimed in claim 1 or claim 2, wherein at least one of the agents selected from among the base treatment agent, base reinforcing agent, and coloring agent, contains metal oxide.

4. A surface treatment agent for treating a calcium-containing inorganic material as claimed in any one of claims from claim 1 to claim 3, wherein the calcium-containing substance in the base treatment agent contains either one of or both calcium hydroxide and calcium oxide at a total weight ratio, which is calculated in terms of calcium hydroxide, of 0.2 to 2 times the weight ratio of the silica-based powder or granular material.

5. A surface treatment agent for treating a calcium-containing inorganic material as claimed in any one of claims from claim 1 to claim 4, wherein the organic acid and the organic acid salt used in the base treatment agent contain:
at least one kind of organic acid or a salt of an organic acid selected from a group consisting of gluconic acid, spiculisporic acid, lactic acid, acetic acid, propionic acid, and salts of these acids and having a total weight ratio of 0.01 to 0.1 times the total weight ratio of the silica-based powder or granular material and the calcium-containing substance, and
either one of or both arabic acid and a salt of arabic acid having a total weight ratio of 0.1 to 0.5 times the total weight ratio of the silica-based powder or granular material and the calcium-containing substance.

6. A surface treatment agent for treating a calcium-containing inorganic material as claimed in any one of claims from claim 1 to claim 5, wherein said aqueous solution of alkali silicate is a 15 to 40 % solution of an alkali silicate, of which the molar ratio of the silicon oxide (SiO₂) to the alkali is in the range of 5 to 7.5.

7. A surface treatment agent for treating a calcium-containing inorganic material as claimed in any one of claims from claim 3 to claim 6, wherein said metal oxide has a weight ratio of 0.1 to 5 times the weight ratio of the alkali silicate solution remaining after the weight of water has been subtracted.

8. A surface treatment agent for treating a calcium-containing inorganic material as claimed in any one of claims from claim 1 to claim 7, wherein the organic acid and the organic acid salt used in either one of or both the base reinforcing agent and color agent contain:
at least one kind of organic acid or a salt of an organic acid selected from a group consisting of gluconic acid, spiculisporic acid, lactic acid, acetic acid, propionic acid, and salts of these acids and having a total weight ratio of 0.01 to 0.1 times the weight ratio of the alkali silicate solution remaining after the weight of water has been subtracted, and
either one of or both arabic acid and a salt of arabic acid having a total weight ratio of 0.1 to 0.5 times the weight ratio of the alkali silicate solution remaining after the weight of water has been subtracted.

9. A surface treatment agent for treating a calcium-containing inorganic material as claimed in any one of claims from claim 1 to claim 8, wherein the agent contains a pigment.

10. A surface treatment agent for treating a calcium-containing inorganic material as claimed in any one of claims from claim 1 to claim 9, wherein said pigment is an inorganic pigment having a weight ratio of 0.1 to 12 times the weight ratio of the alkali silicate,

11. A surface treatment agent for treating a calcium-containing inorganic material as claimed in any one of claims from claim 1 to claim 10, wherein either one of or both the base reinforcing agent and coloring agent contain porous, amorphous silica-based powder at the mixing ration ranging from 1.0 to 15 times the weight ratio of the alkali silicate solution remaining after the weight of water has been subtracted.

12. A method of treating the surface of a calcium-containing inorganic material, wherein:
a thin coating film of the base treatment agent of a surface treatment agent for treating a calcium-containing inorganic material as claimed in claim 1 or any one of claims from claim 3 to claim 11 is formed by applying said base treatment agent onto the surface of a calcium containing inorganic material; and thereafter
the base reinforcing agent of said surface treatment agent for treating the surface of a calcium containing inorganic material is applied in the manner of a thin film onto the surface of said thin coating film of the base treatment agent.

13. A method of treating the surface of a calcium-containing inorganic material, wherein:
a thin coating film of the base treatment agent of a surface treatment agent for treating a calcium-containing inorganic material as claimed in claim 1 or any one of claims from claim 3 to claim 11 is formed by applying said base treatment agent onto the surface of a calcium containing inorganic material;
the base reinforcing agent of said surface treatment agent for treating the surface of a calcium containing inorganic material is applied in the manner of a thin film onto the surface of said thin coating film of the base treatment agent; and thereafter
a thin coating film of the coloring agent as claimed in any one of claims from claim 2 to claim 11 is formed by applying said coloring agent onto the surface of said thin coating film of the base reinforcing agent.
